# EUROPEAN PATENT SPECIFICATION

(11) **EP 2 393 195 B1**
(45) Date of publication and mention of the grant of the patent: **30.10.2019**
(21) Application number: 11168741.4
(22) Date of filing: 03.06.2011
(51) Int. Cl.: H02M 3/335

(54) **DC-DC Converter and associated driving method**
Gleichspannungswandler und zughöriges Antriebsverfahren
Convertisseur CC/CC et procédé de commande associé

(30) Priority: 03.06.2010 IT TO20100464
(43) Date of publication of application: 07.12.2011
(73) Proprietor: LEONARDO S.p.A., 00195 Roma (IT)
(72) Inventor: Anastasio, Vincenzo, 80123 Napoli (IT); Di Donna, Laura, 83042 Atripalda (IT); Marino, Pompeo, 80122 Napoli (IT); Cavallo, Alberto, 80122 Napoli (IT); Guida, Beniamino, 81031 Aversa (IT); Rubino, Luigi, 81031 Aversa (IT)
(74) Representative: Bergadano, Mirko

(56) References cited:
- US-A1- 2003 128 556
- KUNRONG WANG ET AL: "Operation principles of bi-directional full-bridge DC/DC converter with unified soft-switching scheme and soft-starting capability", APPLIED POWER ELECTRONICS CONFERENCE AND EXPOSITION, 2000.APEC 2000.FIFTEENTH ANNUAL IEEE,, vol. 1, 6 February 2000 (2000-02-06), pages 111-118, XP010371698, DOI: DOI:10.1109/APEC.2000.826092 ISBN: 978-0-7803-5864-5
- JIH-SHENG LAI ET AL: "Energy Management Power Converters in Hybrid Electric and Fuel Cell Vehicles", PROCEEDINGS OF THE IEEE, IEEE. NEW YORK, US, vol. 95, no. 4, 1 April 2007 (2007-04-01), pages 766-777, XP011180090, ISSN: 0018-9219, DOI: DOI:10.1109/JPROC.2006.890122
- KAZIMIERCZUK M K ET AL: "Topologies of bidirectional PWM dc-dc power converters", AEROSPACE AND ELECTRONICS CONFERENCE, 1993. NAECON 1993., PROCEEDINGS OF THE IEEE 1993 NATIONAL DAYTON, OH, USA 24-28 MAY 1993, NEW YORK, NY, USA,IEEE, US, 24 May 1993 (1993-05-24), pages 435-441, XP010115981, DOI: DOI:10.1109/NAECON.1993.290953 ISBN: 978-0-7803-1295-1

## Description

The present invention relates to a DC-DC converter and associated driving method, in particular to a high-power bi-directional DC-DC converter able to operate both in a step-up voltage operating mode (boost mode) and in a step-down voltage operating mode (buck mode).

As is known, a bi-directional DC-DC converter basically performs two operations: stepping up the voltage (boost mode) between an input side, where there is a low-voltage DC source (28 V for example), and an output side, where a higher DC voltage than that present on the input side is required (270 V for example); and stepping down the voltage (buck mode) between an input side, where there is a high-voltage DC source, and a output side, where a lower DC voltage than that present on the input side is required.

As is known, these days it is of crucial importance in energy conversion applications to be able to handle energy flows between heterogeneous sources. In the field of aeronautics, for example, multiple energy sources coexist on an aircraft: batteries (DC voltage of approximately 28 V) and turbines (AC voltage of approximately 125 V with a frequency of 400 Hz), to mention just the main ones. The onboard equipment of an aircraft uses a voltage defined by globally accepted avionic standards for its operation, for example, 270 VDC.

Currently, the items of power supply equipment used aboard aircraft, such as battery chargers and DC-DC converters for example, are specially made for this purpose and are expressly separate from each other. For example, battery charging is handled by appropriate battery chargers, while the step of extracting energy from the batteries is handled by means of DC-DC inverter and/or converter devices. Arranging a plurality of apparatuses and hardware devices that are separate from each other, each one configured for a specific application (for example a plurality of converters operating in boost mode and a plurality of converters operating in buck mode) entails large bulk and large weight. This consequentially generates higher fuel costs when the aircraft flies and a complex aircraft electrical network (in fact, the electrical network must be configured so as to control the operation of only one converter at a time and to prevent the presence of two generators on the same bus, unless specifically designed for this purpose). The boost mode is in fact only activated in an emergency (when the other sources normally used are not available) to power onboard apparatuses or devices the correct functioning of which is of vital importance, by using the charge accumulated in the batteries. If the battery charger was not disconnected, the power effectively available for these apparatuses and devices would be equal to the difference between the power generated and that absorbed by the battery charger (assumed to be limited to a lower power level than that than that which can be provided by the converter operating in boost mode). Besides the pointless overloading of the converter, the residual power available for consumption might not be sufficient.

Document by Kunrong Wang et al., "Operation principles of bi-directional full-bridge DC/DC converter with unified soft-switching scheme and soft-starting capability", Applied Power Electronics Conference and Exposition, 15th annual IEEE, vol. 1, 6 February 2000, pages 111-118, discloses a bidirectional dual full-bridge DC/DC converter with a simple voltage clamp branch used to limit transient voltage across current fed bridge and realize zerovoltage switching in boost mode, while achieving hybrid zero-voltage/zero-current switching in buck mode.

Document US 2003/128556 relates to the field of switching DC-to-DC power conversion and in particular to parallel operation with current sharing of switching converters employing one or more synchronous rectifiers (MOSFETs) on their outputs and methods how to ensure smooth start-up with no overshoots.

Document by Jih-sheng Lai et al., "Energy Management Power Converters in Hybrid Electric and Fuel Cell Vehicles", Proceedings of the IEEE, vol. 95, No. 4, 1 April 2007, pages 766-777, discloses a bidirectional DC/DC converters, along with low-voltage energy storages, for the high-voltage DC bus and traction motor drives for hybrid electric and fuel cell vehicles.

However, the above mentioned issues remain unsolved.

The object of the present invention is to provide a scalable, virtually autonomous, bi-directional DC-DC converter, able to interface with buses of unknown power and to operate in step-down mode or in step-up mode as needed, and an associated driving method.

According to the present invention, a DC-DC converter and a driving method for the bi-directional DC-DC converter is provided, as defined respectively in claims 1 and 13.

In particular, the DC-DC converter is of the bi-directional type and connectable between a first region having a first potential and a second region having a second potential, and comprises: a first converter network that can be coupled to the first region; a second converter network that can be coupled to the second region; a transformer having a first winding that can be coupled to the first region by means of the first converter network and a second winding that can be coupled to the second region by means of the second converter network. The converter further comprises an active clamp branch, connected in parallel to the first converter network and including an enabling switch, a commutator switch, and a first capacitor connected in series to one another. The enabling switch is held open during a step-down voltage operating mode of the bi-directional converter so as to bypass the active clamp branch and is kept closed during a step-up voltage operating mode of the bi-directional converter so as to connect the active clamp branch. The switching of the commutator switch is controlled during the step-up voltage operating mode by means of a switching signal having a duty cycle increasing by preset steps from a minimum duty-cycle value.

In more detail, according to an embodiment of the present invention, the first converter network comprises a first pair of switching elements in a half bridge configuration, the second converter network comprises a second pair of switching elements in a half bridge configuration, the transformer has a first winding connected to the first region by means of the first pair of switching elements and a second winding connected to the second region by means of the second pair of switching elements, and the active clamp branch is connected in parallel to the first pair of switching elements.

According to a further embodiment of the present invention, the first converter network further comprises a third pair of switching elements connected such that the first and third pair of switching elements have a full bridge configuration, and the second converter network further comprises a fourth pair of switching elements connected such that the second and fourth pair of switching elements have a full bridge configuration. In this case, the active clamp branch is connected in parallel to the first and third pair of switching elements.

According to a further embodiment of the present invention, the first converter network further comprises a fifth pair of switching elements connected in parallel to the first and third pair of switching elements, and the second converter network further comprises a sixth pair of switching elements connected in parallel to the second and fourth pair of switching elements. In this case, the transformer is of the three-phase type and the active clamp branch is connected in parallel to the first, third and fifth pair of switching elements.

According to a further embodiment, the transformer is of the center tap type and the first converter network comprises switches operatively connected between the opposite conduction terminals of the primary winding of the center tap transformer and a same input terminal of the first converter network. The active clamp branch is connected in a way such as to have a parallel connection with both switches of the first converter network. To this end, the active clamp branch comprises the enabling switch, the first capacitor in series with the enabling switch and the two commutator switches. The first commutator switch is connected in series to the enabling switch between a conduction terminal of the latter and one of the conduction terminals of the primary winding; the second commutator switch is connected in series to the enabling switch between the same conduction terminal of the latter to which the first commutator switch is connected and the other one between the conduction terminals of the primary winding.

For a better understanding of the present invention, a preferred embodiment will now be described, purely by way of non-limitative example, with reference to the attached drawings, where:
- Figure 1 shows a bi-directional converter according to the present invention, comprising a DC-DC conversion device connected to a high potential region and to a low potential region by means of respective precharge and protection circuits;
- Figure 2 shows the DC-DC conversion device belonging to the bi-directional converter of Figure 1 and having a cellular architecture, according to an embodiment of the present invention;
- Figure 3 shows a circuit embodiment of each cell of the DC-DC conversion device of Figure 2;
- Figure 4 shows, by means of a block diagram, control and driving logic for each cell of Figure 3 of the DC-DC conversion device of Figure 2;
- Figure 5 shows, by means of a flowchart, the steps for precharging the bi-directional converter of Figure 1 in boost mode;
- Figures 6a-6d show the traces of the signals generated by the control and drive logic of Figure 4 in boost mode with a duty cycle greater than 50%;
- Figures 7a-7f show the traces of the signals generated by the control and drive logic of Figure 4 in boost mode with a duty cycle less than 50%;
- Figure 8 shows an equivalent input circuit of the bi-directional converter of Figure 1 when operated in boost mode with a duty cycle less than 50% using the signals of Figures 7a-7f;
- Figure 9 shows, by means of a flowchart, the steps for precharging the bi-directional converter of Figure 1 in buck mode;
- Figures 10a-10f show the traces of the signals generated by the control and drive logic of Figure 4 in buck mode;
- Figure 11 shows a drive logic circuit of the portion of the cell of Figure 3 connected to the low potential region, in particular for driving the active clamp branch;
- Figures 12a-12g show the traces of the signals generated by the logic circuit of Figure 11;
- Figure 13 shows a circuit for introducing dead times in the signals of Figures 6a-6d, 7a-7f and 10a-10f, using the logic circuit of Figure 11;
- Figures 14a-14c show, by way of example, the functioning of the circuit for introducing dead times of Figure 13, showing the traces of a possible input signal to the circuit to introduce dead times and the output signal it generates, with respect to a clock signal;
- Figure 15 shows a variable duty cycle generator;
- Figure 16 shows a waveform of the output voltage during the start-up of the bi-directional converter of Figure 1 in boost mode;
- Figure 17 shows a waveform of the output voltage during the start-up of the bi-directional converter of Figure 1 in buck mode;
- Figure 18 shows a further circuit embodiment of each cell of the DC-DC conversion device of Figure 2, in alternative to the embodiment of Figure 3; and
- Figure 19 shows a further circuit embodiment of each cell of the DC-DC conversion device of Figure 2, in alternative to the embodiments of Figure 3 and Figure 18.

The DC/DC converters utilized in the aeronautical field have design specifications of high efficiency, low weight and compact dimensions. The high efficiency specification is satisfied by using known converters of the resonant type, as these can achieve high performance. However, resonant converters do not meet the specifications concerning compact dimensions and low weight. These specifications can instead be met by a number of small-sized converters in parallel, each of which provides power that is a fraction of the total power required. Considering that the size of the magnetic elements is proportional to the energy, it is evident that having a current N times smaller for each magnetic component amounts to reducing the overall dimensions N times.

If compared to paralleled converters, size is a drawback for resonant converters. A further drawback of resonant converters in terms of dimensions is related to the oversizing due to the high voltages and/or currents that are achieved as a consequence of the effect of resonance. It is also known that paralleled converters driven in interlace mode (i.e. each cell is driven in hard switching) achieve very high efficiency levels, comparable with those of resonant monolithic converters. These considerations make them excellent candidates in the aeronautical field. Interconnection can be made on all converter topologies that allow PWM driving on condition that certain requirements are satisfied, such as the possibility of setting a null power flow for example. Another very important requirement is that the converter must possess is the ability to perform a soft start-up. In the specific case of boost full bridge converters, in step-up mode, the necessary requirements for PWM driving are not met if a basic layout is used that does not include specific elements to avoid overvoltages at the terminals of the boost inductor during the conversion start-up transient. This would in fact result in the destruction of the full bridge that is connected to it. It is possible to overcome these topological deficiencies by introducing a flyback transformer (for the soft start-up) combined with an active clamp branch. However, this solution is suited to make the converter work in resonant mode and moreover requires the addition of a flyback transformer, which therefore entails more weight and bulk.

The converter according to the present invention, comprising just one bypassable active clamp and controlled by means of an opportune drive method, enables the interconnection of several boost-full bridge modules, their soft start-up and shut-down, without using additional hardware. The drive method is such as to allow operation in both step-up and step-down modes.

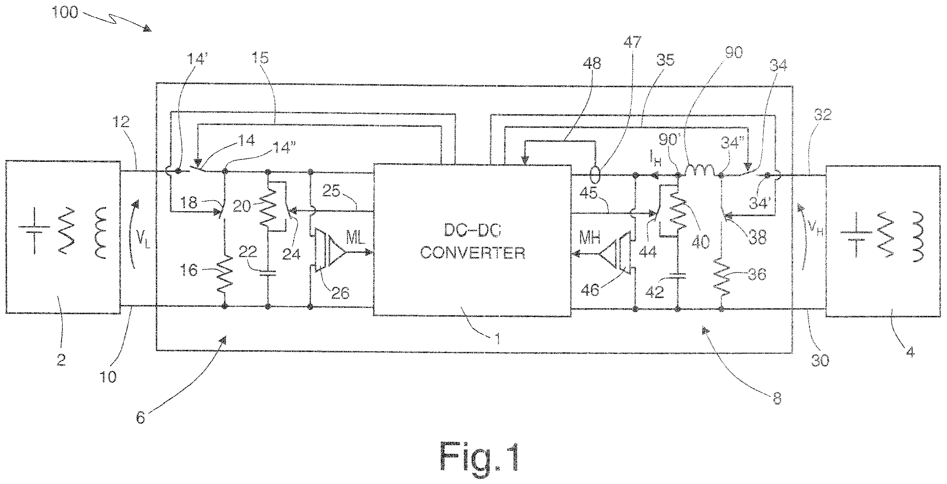

Figure 1 shows a DC-DC conversion device 1 electrically connectable between a low potential region 2 (a generic low-power bus), for example a battery able to supply approximately 28 V, and a high potential region 4 (a generic high-power bus), for example an apparatus of an aircraft, functioning at a voltage of 270 V. The low potential region 2 and the high potential region 4 can indifferently comprise active and/or passive elements.

The DC-DC conversion device 1 is connected to the low potential region 2 by means of a first power interface 6 and is connected to the high potential region 4 by means of a second power interface 8. The first power interface 6 and the second power interface 8 are made in a similar manner to one another and are mutually symmetrical with respect to the DC-DC conversion device 1. The DC-DC conversion device 1, together with the first power interface 6 and the second power interface 8, form a bi-directional converter 100.

The first power interface 6 comprises a first electrical branch 10 directly connecting the low potential region 2 to the DC-DC conversion device 1 and a second electrical branch 12 connecting the low potential region 2 to the DC-DC conversion device 1 by means of a first switch 14, the opening and closing of which is controlled by the DC-DC conversion device 1 through a control connection 15. The first switch 14 is connected between a first node 14' directly connected to the second electrical branch 12 and a second node 14" that ideally coincides with the first node 14' when the first switch 14 is closed. When the first switch 14 is open, the first power interface 6 is not directly powered by, or does not power, the low potential region 2; vice versa, when the first switch 14 is closed, the first power interface 6 is directly powered by, or powers, the low potential region 2. The first power interface 6 further comprises a first resistor 16 and a second switch 18, arranged in series to one another and connecting the first electrical branch 10 to the second electrical branch 12. Resistor 16 ensures the presence of a load on the DC-DC conversion device 1 even in the case of sudden disconnection of the low potential region 2.

The first power interface 6 further comprises a second resistor 20 and a first capacitor 22, arranged in series to one another and connecting the first electrical branch 10 to the second electrical branch 12. In particular, the first capacitor 22 is directly connected to the first electrical branch 10 and is connected to the second electrical branch 12 through the second resistor 20. In this way, the series constituted by the first resistor 16 and the second switch 18 is connected in parallel to the series constituted by the second resistor 20 and the first capacitor 22. The second resistor 20 is also connected in parallel to a third switch 24 able to create, when closed, a short circuit that bypasses the second resistor 20. The opening and closing of the third switch 24 is directly controlled by the DC-DC conversion device 1, through a control connection 25, on the basis of whether or not, during use, it is necessary to charge the first capacitor 22. In addition, a voltage detector 26, of the isolated type, is connected between the first electrical branch 10 and the second node 14" of the first switch 14, and configured to detect the voltage preen between the first electrical branch 10 and the second node 14" of the first switch 14 and provide the DC-DC conversion device 1 with the detected value (this value is indicated by reference M_{L}, as better described further on).

The second power interface 8 is, as mentioned, symmetrical to the first power interface 6 with respect to the DC-DC conversion device 1. The second power interface 8 therefore comprises a third electrical branch 30 directly connecting the high potential region 4 to the DC-DC conversion device 1 and a fourth electrical branch 32 connecting the high potential region 4 to the DC-DC conversion device 1 by means of a fourth switch 34, the opening and closing of which is controlled by the DC-DC conversion device 1 through a control connection 35. The fourth switch 34 is connected between a third node 34' directly connected to the fourth electrical branch 32 and a fourth node 34" that ideally coincides with the third node 34' when the fourth switch 34 is closed. When the fourth switch 34 is open, the second power interface 8 does not power, or is not directly powered by, the high potential region 4; vice versa, when the fourth switch 34 is closed, the second power interface 8 powers, or is directly powered by, the high potential region 4. The second power interface 8 further comprises a third resistor 36 and a fifth switch 38, arranged in series to one another and connecting the third electrical branch 30 to the fourth node 34". Resistor 36, like resistor 16, has the function of ensuring the presence of a load on the DC-DC conversion device 1 even in the case of sudden disconnection of the high potential region 4.

An inductor 90 is connected in series with the fourth switch 34, connected to the fourth node 34". The inductor 90 is connected between the fourth node 34" and a fifth node 90'. The second power interface 8 further comprises a fourth resistor 40 and a second capacitor 42, connected in series to one another. The series constituted by the third resistor 36 and the fifth switch 38 and the series constituted by the fourth resistor 40 and the second capacitor 42 are connected between the third electrical branch 30 and, respectively, the fourth node 34" and fifth node 90'. The fourth resistor 40 is also connected in parallel to a sixth switch 44 able to create, when closed, a short circuit that bypasses the fourth resistor 40. The opening and closing of the sixth switch 44 is directly controlled by the DC-DC conversion device 1, through a control connection 45, on the basis of whether or not it is necessary to charge the second capacitor 42. In addition, a voltage detector 46 is connected in parallel to the series of the fourth resistor 40 and the second capacitor 42, and is configured to detect the voltage present at its terminals and provide the DC-DC conversion device 1 with this detected value (value indicated by reference M_{H}, as better described further on). Lastly, by means of a current transducer 47 connected to the fifth node 90', the DC-DC conversion device 1 knows the current I_{H} that flows from and to the DC-DC conversion device 1.

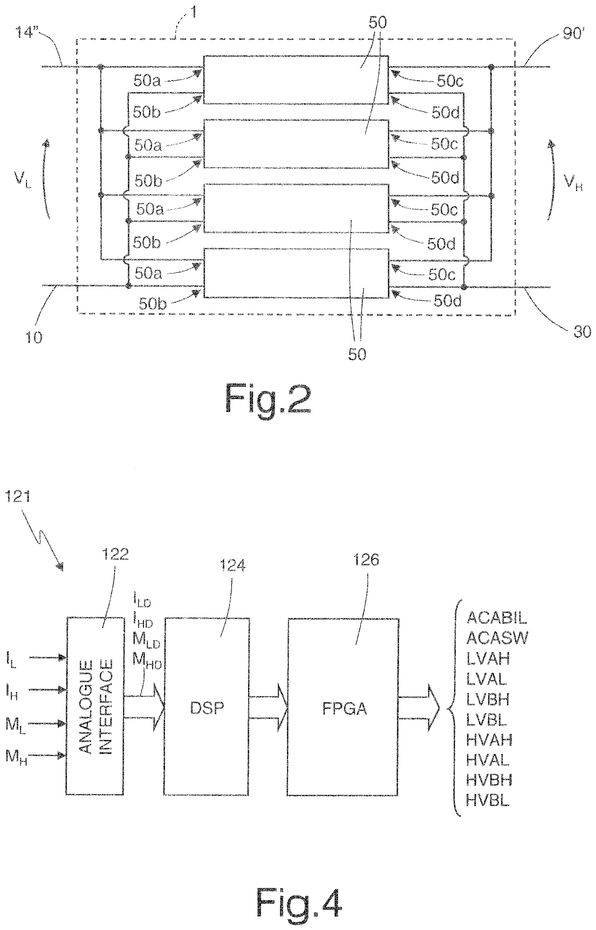

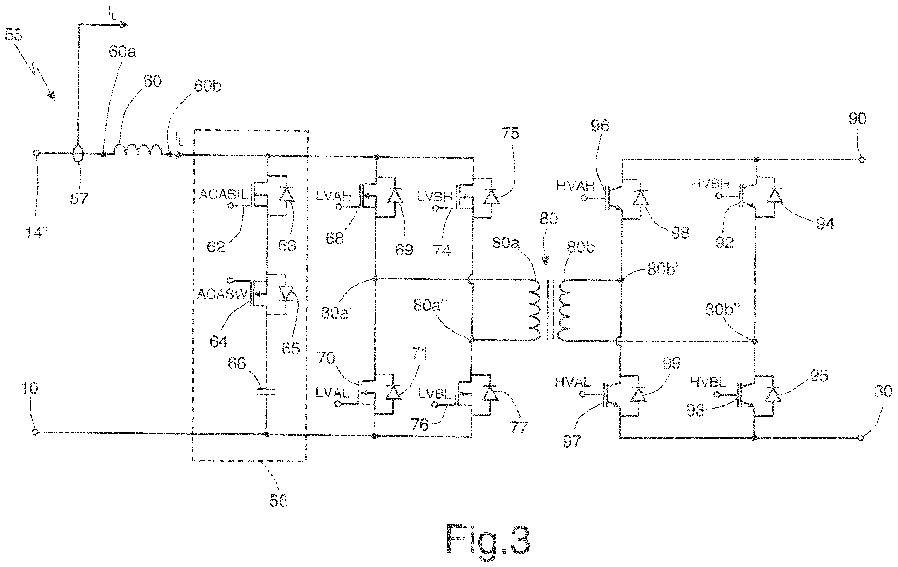

Figure 2 schematically shows a portion of the DC-DC conversion device 1 according to an embodiment of the present invention (the control, signal analysis and drive logic of the DC-DC conversion device 1 is not shown in Figure 2; this logic is shown and described with reference to Figure 4). The DC-DC conversion device 1 of Figure 2 comprises a plurality of mutually identical cells 50. According to the embodiment of Figure 2, the DC-DC conversion device 1 comprises four cells 50; however, it is possible to make a DC-DC conversion device 1 comprising a single cell 50 or more than four cells 50. Each cell is of the type shown in Figure 3 and described with reference to this figure.

Each cell 50 comprises a first port 50a electrically connected to the second node 14" of the first switch 14, a second port 50b electrically connected to the first electrical branch 10, a third port 50c electrically connected to the fifth node 90', and a fourth port 50d electrically connected to the third electrical branch 30.

The cells 50 are therefore connected to each other in PIPO (Parallel Input Parallel Output) mode, forming a high-power DC-DC conversion device 1. For example, according to the embodiment of Figure 2, if each cell 50 is configured to handle 3 kW of power, the total power handled by the DC-DC conversion device 1 of Figure 2 is 12 kW. By sharing the same input and the same output, each cell 50 works with a fraction of the total power.

The basic structure of each cell 50 comprises an isolated boost full bridge converter 55, of the type shown in Figure 3 for example. In particular, from the hardware standpoint, the isolated boost full bridge converter 55 of Figure 3 differs from known types of converters for the presence of a bypassable active clamp branch 56. It also differs in the modulation method used to control it during use (illustrated further on).

The input of the isolated boost full bridge converter 55 on the side of the low potential region 2 comprises a current transducer 57. In this way, the DC-DC conversion device 1 knows the current I_{L} that flows in node 14".

The isolated boost full bridge converter 55 further comprises, connected in series to the current transducer 57 on the second electrical branch 12, an inductor 60 having a first terminal 60a connected to the second node 14" and a second terminal 60b connecting the second node 14" to the active clamp branch 56.

The inductor 60 is used in boost mode to perform a first increase in the voltage at the second terminal 60b of the inductor 60; vice versa, in buck mode, the inductor 60 together with the capacitor 22 function as a LC filter in such a way as to eliminate the switching harmonics.

The active clamp branch 56 comprises a transistor 62, another transistor 64 and a capacitor 66 connected in series to one another such that a conduction terminal (in particular the drain terminal) of transistor 62 is connected to the second electrical branch 12 by means of the second terminal of the inductor 60, a terminal of capacitor 66 is connected to the first electrical branch 10, and transistor 64 is connected, by means of its source terminal, to the source terminal of transistor 62 and, by means of its drain terminal, to the other terminal of capacitor 66. All of the transistors employed are equipped with an internal diode, shown in the figures as connected in parallel to the power terminals of the devices and opportunely exploited as described in detail further on. In use, transistor 64 exploits diode 65 in one of the work steps, namely when the active clamp 56 is enabled, while diode 69 inside transistor 62 is never used. In parallel with the active clamp branch 56 there is also a branch comprising transistor 68 and transistor 70 connected in series to one another, each equipped with an internal diode, respectively indicated in the figures as diode 69 and diode 71, connected in antiparallel to transistor 68 and transistor 70 respectively. Lastly, again in parallel with the active clamp branch 56, there is a further branch comprising a transistor 74 and another transistor 76 connected in series to one another and each equipped with a respective diode, respectively indicated in the figures as diode 75 and diode 77 and connected in antiparallel to transistor 74 and transistor 76 respectively. Transistors 68, 70, 74 and 76 are connected to each other so as to make a structure known as a full bridge, also called an H-bridge.

The inductor 60, the active clamp branch 56 and the branches comprising transistor 68, transistor 70, transistor 74 and transistor 76 are connected to a winding 80a of a transformer 80. In particular, winding 80a comprises a first terminal 80a' connected between transistor 68 and transistor 70 and a second terminal 80a" connected between transistor 74 and transistor 76.

The problem resolved by transistor 62, which enables the active clamp, is mainly linked with handling rush currents on capacitor 66. From initially examining operation in step-down mode, it has been noted how the inductor 60 and capacitor 22 are used to make a LC filter. Assuming that transistor 62 is not connected, it is noted how switching off transistor 64 would result, on the one hand, in correctly avoiding changes in the response of the LC filter formed by the inductor 60 and capacitor 22, but, on the other hand, capacitor 66 would have to handle very high current peaks in the start-up step. Therefore, it is not enough to switch off transistor 64, as electric current can flow to capacitor 66 through diode 65. The presence of transistor 62, operated as an open switch in step-down mode, is fundamental for overcurrent protection on capacitor 66.

Alternatively to what has been said, to handle rush current linked to not disabling the active clamp branch 56, it would be necessary to oversize capacitor 66 or apply other hardware protection mechanisms. However, this would be disadvantageous, as it would entail an increase in weight and bulk.

With regard to the step-up mode, the special modulation method explained hereunder allows, together with the active clamp branch 56, the soft start-up of the DC-DC converter.

Each one of transistor 62, transistor 64, transistor 68, transistor 70, transistor 74 and transistor 76 is preferably a power MOSFET transistor and has its own control terminal (gate terminal) with conduction and cutoff controlled by an appropriate signal. With reference to the following figures as well, where the control signals of each transistor also are shown, transistor 62 is controlled by signal ACABIL, transistor 64 is controlled by signal ACASW, transistor 68 is controlled by signal LVAH, transistor 70 is controlled by signal LVAL, transistor 74 is controlled by signal LVBH, and transistor 76 is controlled by signal LVBL.

The isolated boost full bridge converter 55 further comprises a transistor 92 and another transistor 93, arranged in series with each other and connected between the third electrical branch 30 and the fifth node 90', and internally equipped with diode 94 and diode 95 respectively (shown connected in parallel to transistor 92 and transistor 93 respectively); and a transistor 96 and another transistor 97 arranged in series with each other and connected between the third electrical branch 30 and the fifth node 90', internally equipped with diode 98 and diode 99 respectively (shown connected in parallel to transistor 92 and transistor 93 respectively). Transistors 92, 93, 96 and 97 are connected to each other so as to make a structure known as a full bridge, also called a said H-bridge.

The branches comprising transistor 92, transistor 93, transistor 96 and transistor 97 are connected to winding 80b of the transformer 80. In particular, winding 80b comprises a first terminal 80b' connected between transistor 96 and transistor 97 and a second terminal 80b" connected between transistor 92 and transistor 93.

Each one of transistor 92, transistor 93, transistor 96 and transistor 97 is an IGBT-type transistor and has its own control terminal with conduction and cutoff controlled by an appropriate signal. With reference to the following figures as well, where the drive signals of each transistor are shown in detail, transistor 92 is controlled by signal HVBH, transistor 93 is controlled by signal HVBL, transistor 96 is controlled by signal HVAH, and transistor 97 is controlled by signal HVAL.

Figure 4 shows, by means of a block diagram, the control and drive logic 121 of the DC-DC conversion device 1 (each cell 50 is driven by the same signals used to drive the other cells 50) .

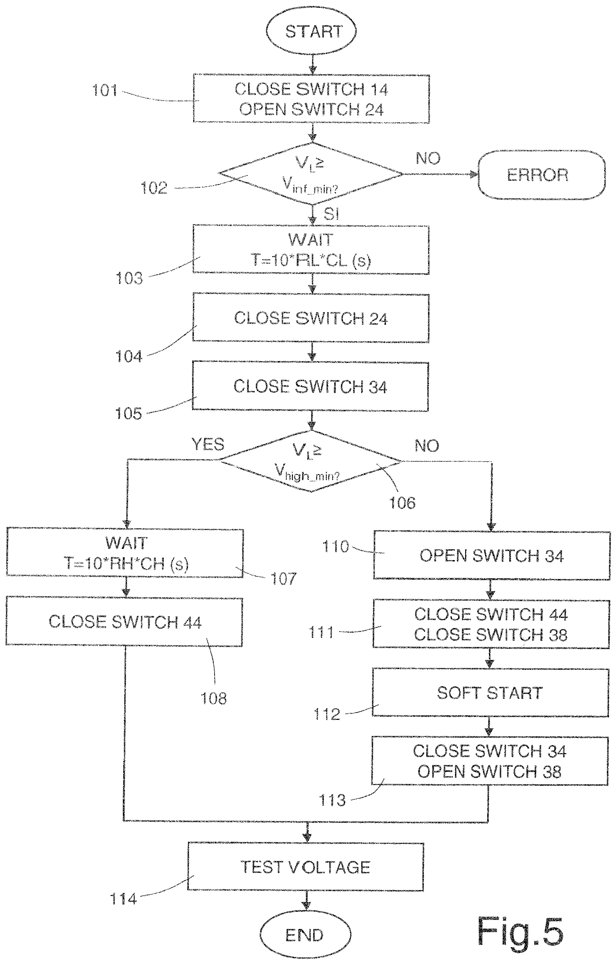

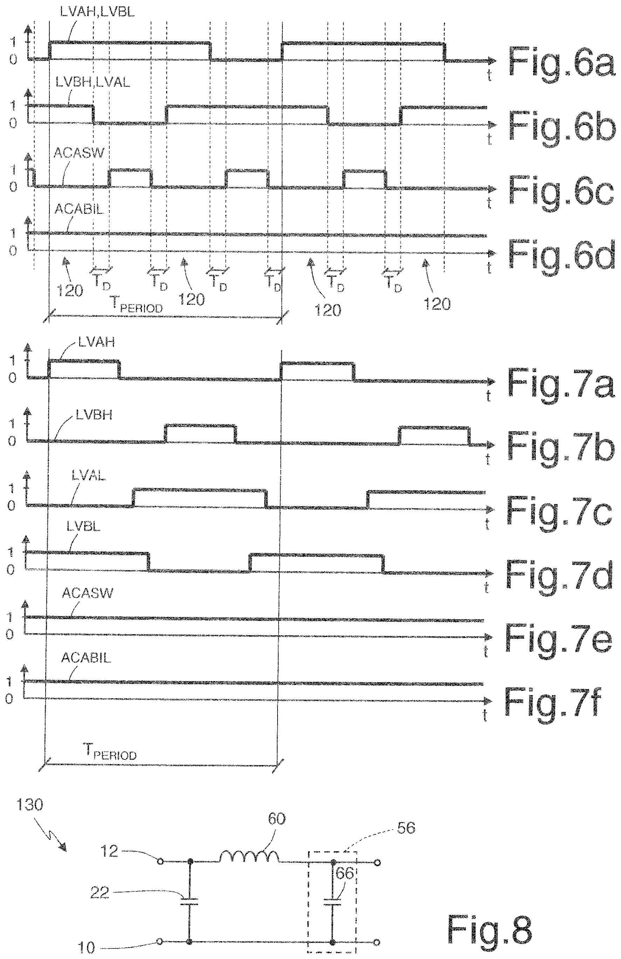

The control and drive logic 121 comprises an analogue signal conditioning interface 122, configured to receive currents I_{L} and I_{H} (from current transducers 57 and 47) and voltage values M_{L} and M_{H} (from voltage detectors 26 and 46); a digital signal processor (DSP) 124, connected to the analogue interface 122 (the latter equipped with one or more A/D converters for the analogue the digital conversion of analogue quantities I_{L}, I_{H}, M_{L} and M_{H}, for subsequent processing); and a drive signal generator 126, for example an FPGA (Field Programmable Gate Array). The analogue interface 122 is configured to receive analogue input signals (in particular, currents I_{L} and I_{H} and the voltage values M_{L} and M_{H}) and generate respective digital output signals I_{LD}, I_{HD}, M_{LD} and M_{HD}, correlated to the analogue input signals received, and having a format such that they can be correctly interpreted by the digital signal processor 124. The digital processor 124 receives digital input signals I_{LD}, I_{HD}, M_{LD} and M_{HD} and controls the drive signal generator 126 so that the latter generates the output drive signals ACABIL, ACASW, LVAH, LVAL, LVBH, LVBL, HVAH, HVAL, HVBH and HVBL for each cell 50, as well as drive signals for switches 14, 18 and 24 belonging to the first power interface 6 and switches 34, 38 and 44 of the second power interface 8. From the hardware standpoint, the analogue interface 122, the digital signal processor 124 and the drive signal generator 126 are of known types and are widely used in known buck/boost DC-DC converters. According to the present invention, the analogue interface 122, the digital signal processor 124 and the drive signal generator 126 implement a driving method for the bi-directional converter 100 both in buck mode and in boost mode, and of passing between the two modes of the type shown in Figures 5 and 6 and described with reference to these figures.

The digital signal processor 124 executes a voltage control algorithm at regular intervals (for example every 93 µs). Following to this algorithm, the signals I_{LD}, I_{HD}, M_{LD} and M_{HD} provided by the interface 122 are acquired. Then the operating mode (buck or boost) that the converter 100 must work in is checked. Lastly, having identified the operating mode, it is checked whether the converter 100 is at the first start-up or if the converter 100 has already been started. In the first case (first start-up), a soft start-up is performed (as better described further on, during the soft start-up the DC-DC conversion performed by the bi-directional converter 100 is controlled by increasing or decreasing the value of the duty cycle by preset steps). Vice versa (not first start-up), the converter 100 is controlled to operate in buck or boost mode.

Once the soft start-up step is terminated (the voltage supplied to the low potential region 2, in the case of buck mode, or voltage supplied to the high potential region 4, in the case of boost mode, has reached a preset threshold value), the converter 100 works in buck or boost mode.

The bi-directional converter 100 can find application both as a boost converter and as a buck converter, and can pass from one operating mode to the other very quickly, in the order of a few hundred milliseconds.

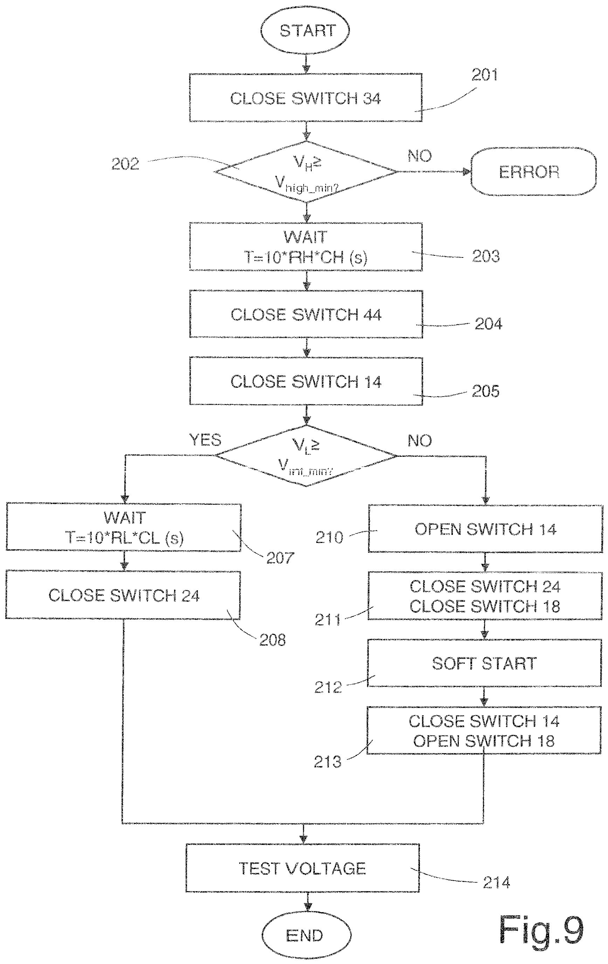

Based on the current readings I_{L} and I_{H}, and on the values M_{L} and M_{H}, the bi-directional converter 100 implements one of the two methods, respectively related to the buck and boost operating modes, illustrated by means of the flowchart in Figure 5 (where the bi-directional converter 100 works as a boost converter) and in Figure 9 (where the bi-directional converter 100 works as a buck converter).

The behaviour of the bi-directional converter 100 in boost mode is the dual of the behaviour of the bi-directional converter 100 in buck mode, and vice versa.

With reference to Figure 5 (boost mode), the digital signal processor 124 first of all checks if the voltage V_{L} from low potential region 2 (voltage generated by a battery for example) is sufficient for boost operation.

Prior to step 101, the first switch 14, second switch 18, third switch 24, fourth switch 34, fifth switch 38 and sixth switch 44 are open. To start boost operation, step 101, the digital signal processor 124 closes the first switch 14 and keeps the third switch 24 open. If voltage V_{L} is too low, below a preset threshold value Vinf_min, then the NO exit is taken from step 102 and boost operation terminates, signalling an error. Otherwise, the YES exit is taken from step 102 and processing waits, in step 103, for the first capacitor 22 to become fully charged. The charging time T_{CL} of the first capacitor 22 is given by T_{CL}=10·R_{L}·C_{L} seconds, where R_{L} is the resistance value of the second resistor 20 and C_{L} is the capacitance value of the first capacitor 22. The first capacitor 22 is considered charged after a preset time interval (for example, 100 ms, as mentioned) or upon reaching a preset voltage value at the terminals of the first capacitor 22 (this value is measured by the voltage detector 26).

The monitoring of voltage V_{L} at the input of the first power interface 6 takes place through voltage detector 26, which, based on the reading according to step 102, checks the operation of the DC-DC conversion device 1.

At the end of the wait in step 103, control passes to step 104, where the third switch 24 is opened by a command from the signal processor 124, thus short-circuiting the second resistor 20.

Then, in step 105, the digital signal processor 124 switches off the fourth switch 34 via a specific command, electrically connecting the high potential region 4 to the second power interface 8. The digital signal processor 124 then checks the voltage value V_{H} at the terminals of the high potential region 4 by means of the value M_{H} generated by the voltage detector 46. If the voltage value V_{H} is sufficiently high, greater than a preset threshold value Vhigh_min, then the YES exit is taken from step 106 and processing waits, in step 107, for the charging of the second capacitor 42. In this case, the charging time T_{CH} of the second capacitor 42 is given by the formula T_{CH}=10·R_{H}·C_{H} seconds, where R_{H} is the resistance value of the fourth resistor 40 and C_{H} is the capacitance value of the second capacitor 42. Then, in step 108, the digital signal processor 124 closes the sixth switch 44, thus short-circuiting the fourth resistor 40.

In the case where the voltage value V_{H} is less than the threshold value Vhigh_min, the NO exit is taken from step 106, the digital signal processor 124 opens the fourth switch 34 (step 110) thereby disconnecting the load given by the high potential region 4 and limiting the start-up current of the DC-DC conversion device 1 to just charging capacitor 42, using, for example, a battery connected to the low potential region 2 as a source. Then, in step 111, the digital signal processor 124 closes the sixth switch 44 and the fifth switch 38 and, in step 112, the soft start-up commences. In the soft start-up mode, the DC-DC conversion performed by the bi-directional converter 100 is controlled by acting directly on the duty cycle (temporarily excluding control of the converter in standard mode operation and only leaving the overcurrent protection active), increasing or decreasing the value taken by the duty cycle by preset steps. For example, the initial value of the duty cycle could be defined as 0% and be incremented by preset steps, 1% for example, at each time interval (each time interval being, for example, defined by a clock cycle). Limiting the maximum increment of the duty cycle at the start-up of the DC-DC conversion device 1 is fundamental for limiting the voltage steps between the fifth node 90' and the third electrical branch 30, and therefore the current absorbed by the initially discharged capacitor 42. When the voltage between the third electrical branch 30 and the fifth node 90' reaches the desired value, the control logic that deals with altering the duty cycle is activated (incrementing or decrementing it by preset steps), with variations confined to a certain band on each cycle, for example, maximum steps of 10% at each time interval. In this way, DC-DC conversion is optimized as the output voltage (supplied to the high potential region 4) is constantly regulated to the optimal value, at the same time preventing damage to the converter 1 linked to large variations in the regulated output voltage and therefore in the currents.

The closure of the fifth switch 38 enables a load inside the second power interface 8, provided by the third resistor 36, to be connected. At the end of the soft start-up procedure in step 112, control passes to step 113, where the digital signal processor 124 closes the fourth switch 34 and opens the fifth switch 38, disconnecting the internal load (the third resistor 36) and connecting the high potential region 4 to the second power interface 8.

Leaving step 108 or 113 leads to step 114 for starting the control algorithm, of known type, and able to ensure the supply of a regulated voltage to the high potential region 4.

The control times of the transistors of each cell 50 of the DC-DC conversion device 1 will now be described, with reference to Figures 6a-6d and 7a-7f. Reference is also made to the circuit diagram in Figure 3.

The active clamp branch 56 is used when the converter works in boost mode. In this mode, transistor 62 is controlled by the digital signal processor 124 via the signal ACABIL, always on (high logic value "1" for signal ACABIL). This allows the turn-off overvoltages at the terminals of transistors 68, 70, 74 and 76 to be limited. Nevertheless, the drive logic of transistor 64 varies according to value taken by the duty cycle of the control signals LVAH of transistor 68, LVAL of transistor 70, LVBH of transistor 74 and LVBL of transistor 76. If the duty cycle of these signals is greater than 50%, as shown in Figures 6a-6d, in each period T_{RERIOD} there are one or more time intervals, indicated by reference numeral 120, where transistor 68, transistor 70, transistor 74 and transistor 76 are simultaneously on, and charge the inductor 60. In this situation, transistor 64, controlled in conduction and cutoff through the digital signal processor 124 by signal ACASW, is turned off when all of the transistors 68, 70, 74 and 76 conduct current (introducing a suitable dead time T_{D}). The introduction of the dead time T_{D} serves to avoid short-circuiting capacitor 66 when it is charged.

If the duty cycle of the signals LVAH and LVBH which control the conduction and cutoff of transistor 68 and transistor 70 respectively, is less than 50%, as shown in Figures 7a-7f, transistor 64 (switched on and off by signal ACASW) can always be on (signal ACASW has high logic value "1" and sots transistor 64 in conduction state), so as to ensure that the charged inductor 60 is never in series with an open circuit that is created when transistors 68 and 74 are simultaneously open (to this end, see the control signals of these transistors in Figures 7a-7f). This condition is to be avoided because for a discontinuity in the current of the inductor 60 there is a corresponding potential difference of amplitude proportional to the derivative of the current; this potential difference can reach values so high that the voltage on the second terminal 60b of the inductor 60 could exceed that for destroying the transistors 68, 70, 74, 76, 62 and 64 and consequently destroy the DC-DC conversion device 1). The inductor 60 is used instead to create an input filter 130 of the CLC type (also called a pi filter), as shown in Figure 8. The input filter 130 is useful for reducing high-frequency current harmonics at the input of the DC-DC conversion device 1, consequently also improving the quality of the equivalent charge, represented by the cascade of the conversion device 1 in boost mode and by the high potential region 4, as seen from the source (which in this case is the low potential region 2).

Returning to Figures 7a-7f, if the duty cycle of signals LVAH and LVBH is less than 50%, it is possible to alternatively control the conduction and cutoff of transistors 68, 70, 74 and 76 so that the conditions in Figures 6a and 6b where both transistors 68 and 70 or both transistors 74 are 76 conduct electric current never arise.

The importance of being able to work with duty cycles below 50% is linked to the fact that in this way it is possible to work in a "zero state", i.e. it is possible to set zero power flow. With reference to Figures 7a-7f, zero power flow is obtained when both the signal of Figure 7a and the signal of Figure 7b are null for the entire duration of the period (which corresponds to a zero duty cycle).

This characteristic is useful during the soft start-up step and to achieve shutdown of the DC-DC conversion device 1 without having to perform electrical disconnection of the low potential region 2.

This result is advantageously achieved without the need to add additional hardware for the start-up and shutdown phases.

Bearing in mind that there could be one or more voltage generators (not shown) on the side of the high potential region 4, it is necessary that the DC-DC conversion device 1 operating in boost mode guarantees the unidirectionality of current from the low potential region 2 to the high potential region 4 in a topological manner.

This objective is achieved by controlling the cutoff of transistor 92, transistor 93, transistor 96 and transistor 97 connected to the high potential region 4. In this way the diodes (indicated in the figures as diode 94, diode 95, diode 98 and diode 99) inside the IGBTs (respectively transistor 92, transistor 93, transistor 96 and transistor 97) are exploited to rectify the output voltage from the transformer 80 (i.e. in output on the side of winding 80b) supplied to the high potential region 4.

Figure 9 shows, by means of a flowchart, a control method for the bi-directional converter 100 in buck mode. First of all, the digital signal processor 124 checks if the voltage V_{H} at the terminals of the high potential region 4 has a sufficiently high value for the requested operation.

Prior to step 201, the first switch 14, second switch 18, third switch 24, fourth switch 34, fifth switch 38 and sixth switch 44 are open. To start buck operation, step 201, the digital signal processor 124 closes the fourth switch 34, keeping the sixth switch 44 open. If the voltage V_{H} is too low, below a preset threshold value Vhigh_min, then the NO exit is taken from step 202 and conversion terminates, signalling an error. Otherwise, the YES exit is taken from step 202 and processing waits, in step 203, for the second capacitor 42 to become fully charged. The charging time T_{CH} of the second capacitor 42 is given by T_{CH}=10·R_{H}·C_{H} seconds, where R_{H} is the resistance value of the fourth resistor 40 and C_{H} is the capacitance value of the second capacitor 42.

The monitoring of the voltage V_{H} at the input of the second power interface 8 takes place through the digital signal processor 124, which, upon receiving the voltage value M_{H} detected by the voltage detector 46, controls operation of the DC-DC conversion device 1 in buck mode or in cutoff.

At the end of the wait in step 203, control passes to step 204, where the digital signal processor 124 closes the sixth switch 44, thus short-circuiting the fourth resistor 40.

Then, in step 205, the first switch 14 is closed, electrically connecting the low potential region 2 to the first power interface 6. The digital signal processor 124 then checks the voltage value V_{L} at the terminals of the low potential region 2, on the basis of the voltage value M_{L} provided by the voltage detector 26. If the voltage value V_{L} is sufficiently high, greater than a preset threshold value Vinf_min, then the YES exit is taken from step 206 and processing waits, in step 207, for the charging of the first capacitor 22.

Controlling the value V_{L} is useful for checking whether the low potential region 2 is purely passive or comprises voltage generators. If the low potential region 2 comprises voltage generators, then it is necessary to wait for the first capacitor 22 to be charged and the soft start-up is not needed. Dual considerations hold for the opposite case. The threshold Vinf_min is chosen so as to determine the presence of generators even when they are discharged, a condition that can occur if batteries are present.

In this case, the charging time T_{CL} is given by the formula T_{CL}=10·R_{L}·C_{L} seconds, where R_{L} is the resistance value of the second resistor 20 and C_{L} is the capacitance value of the first capacitor 22. Then, in step 208, the digital signal processor 124 closes the third switch 24, thus short-circuiting the second resistor 20.

In the case where the voltage value V_{L} is below the threshold value Vinf_min then the NO exit is taken from step 206 and the digital signal processor 124 opens the first switch 14 (step 210), in this way disconnecting the low potential region 2 from the first power interface 6. Then, in step 211, the digital signal processor 124 closes the third switch 24 and the second switch 18 and, in step 212, the soft start-up mode is initiated, as already illustrated earlier on. Closure of the second switch 18 allows a load inside the first power interface 6, provided by first resistor 16, to be connected. The internal load, of a low power rating (less than 100 W), enables the natural discharge of the capacitor. This condition is necessary for the stability of the voltage control implemented by the digital signal processor 124. At the end of the soft start procedure in step 212 control passes to step 213, where the digital signal processor 124 closes the first switch 14 and opens the second switch 18, disconnecting the internal load (the first resistor 16) and connecting the low potential region 2 to the first power interface 6.

Leaving step 208 or 213 leads to step 214 for starting a voltage control algorithm, of known type, able to regulate the voltage supplied to the low potential region 2.

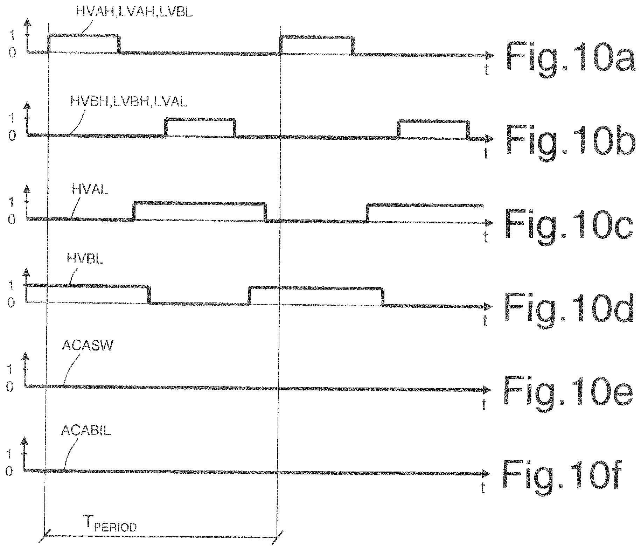

In buck mode, the active clamp branch 56 is disabled and transistors 68, 70, 74 and 76 are controlled so as to make the bridge formed by these transistors function like a synchronous rectifier, in this way exploiting the current bi-directionality of MOSFET devices and consequently increasing efficiency. It is opportune to disable the active clamp branch 56, to prevent the charging current for capacitor 66, neither actively nor passively limited, from possibly damaging even only one of the two bridges formed by transistors 96, 97, 92 and 93 and by transistors 68, 70, 74 and 76, or capacitor 66 itself. By disabling the active clamp branch 56, it is possible to use the inductor 60 and the first capacitor 22 (having the function of an output capacitor in step-down mode) to make an LC filter, in this way limiting the maximum peak current upstream and downstream of the transformer 80. In fact, apart from the transformer ratio, the transformer has identical voltage and current waveforms both in input and in output. The LC filter is also useful or filtering the output voltage and consequently achieving an almost constant voltage trace (except for a small ripple). To this end, the digital signal processor 124 drives transistor 96, transistor 68, transistor 76, transistor 92, transistor 74, transistor 70, transistor 97, transistor 93, transistor 62 and transistor 64 with the respective signals HVAH, LVAH, LVBL, HVBH, LVBH, LVAL, HVAL, HVBL, ACASW and ACABIL, as shown in Figures 10a-10f.

From Figures 10a-10f, it can be deduced that the driving method for the transistors of the first power interface 6 and the second power interface 8 in buck mode is the same as the driving method for the transistors of the first power interface 6 and the second power interface 8 in Figures 7a-7f. In particular, the duty cycle of signals LVAH and LVBH, which control the conduction and cutoff of transistor 68 and transistor 70b respectively, is less than 50%; however, unlike that shown in Figures 7e and 7f, signals ACASW and ACABIL both have low logic value "0", and therefore transistor 62 and transistor 64 are set in the cutoff state by the digital signal processor 124 (i.e. they are off).

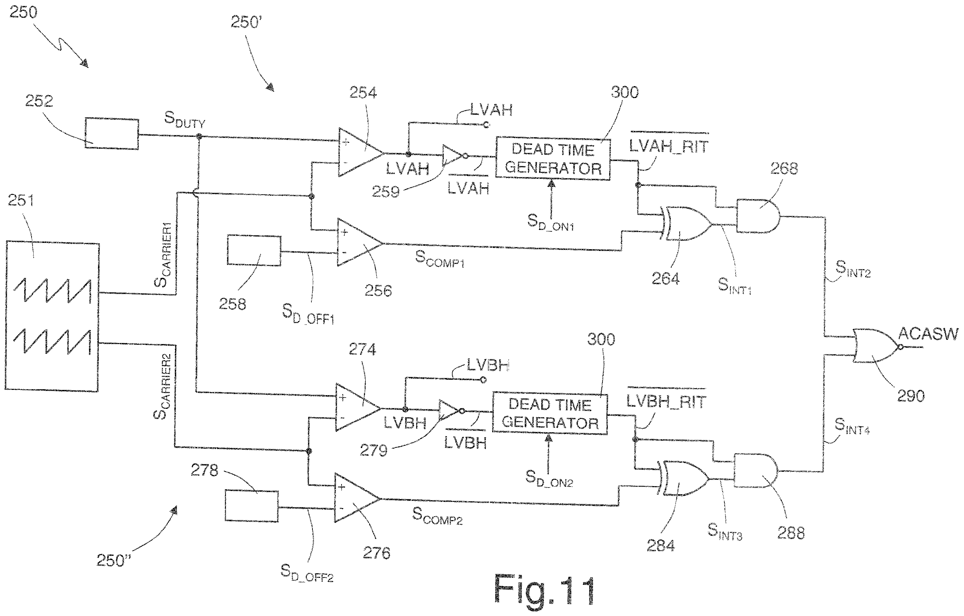

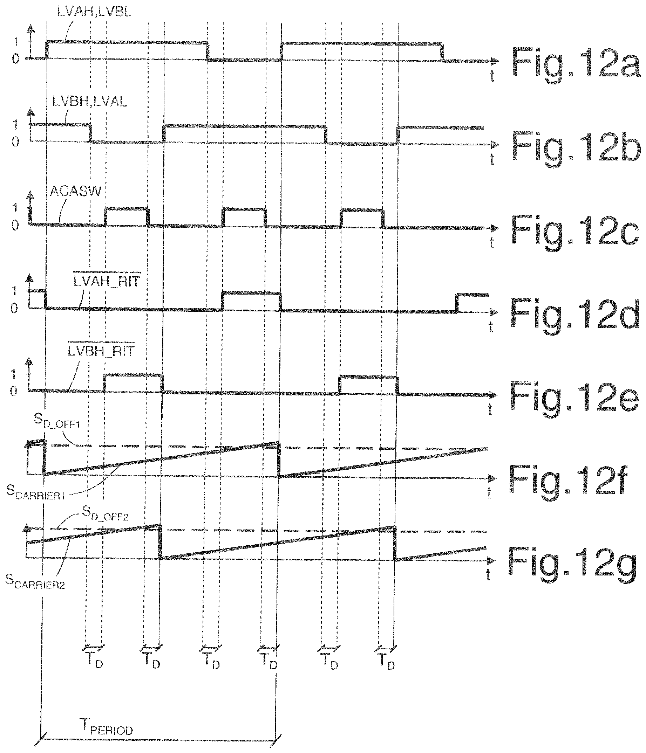

Figure 11 shows a drive circuit 250 of the active clamp branch 56, in particular for the generation of signal ACASW and signals LVAH and LVBH with the respective signals negated. As already mentioned, the active clamp 56 is always disabled in buck mode. It should also be noted that the generation of LVAH and LVBH in Figure 11 is shown with the respective signals negated. Their generation is shown purely by way of example, as these signals are not used directly, but are opportunely processed in accordance that described in the foregoing and shown in Figures 6a-6d and 7a-7f. Figures 12a-12g show the traces of some of the signals used by circuit 250 for the generation of signal ACASW (in particular, Figures 12a-12c are equivalent to Figures 6a-6c and are provided here for greater clarity). In the following, combined reference is made to Figure 11 and Figures 12a-12g.

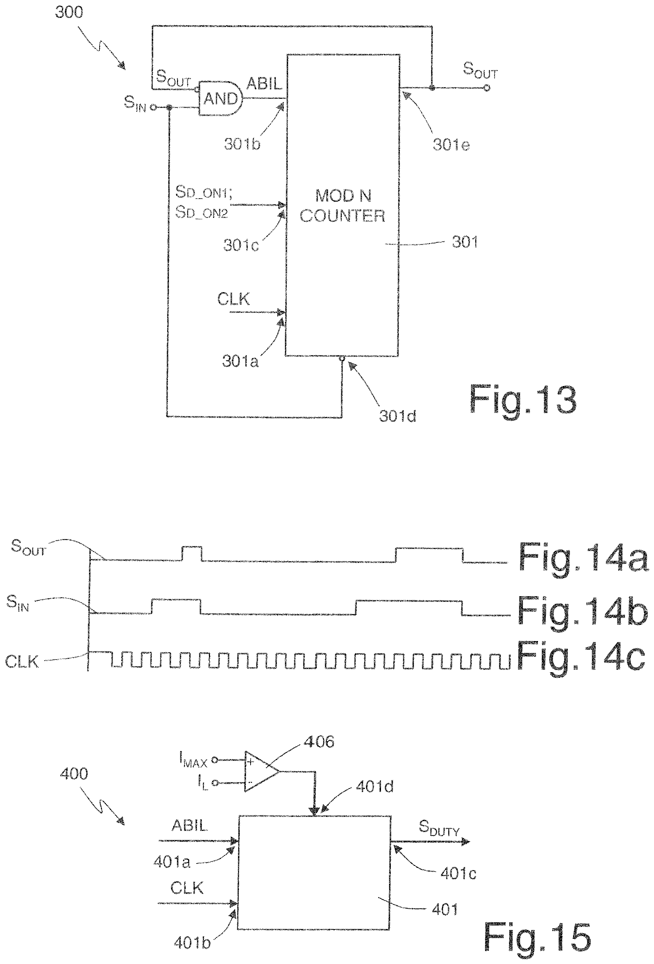

Circuit 250 comprises a carrier generator 251, configured to generate two periodic triangular signals S_{CARRIER1} and S_{CARRIER2} having a period of T_{PERIOD} and with one delayed with respect to the other by half a period T_{PERIOD}, and a duty cycle value generator 252 configured to generate a signal S_{DUTY} representing the desired duty cycle value; this generator schematizes the logic that handles duty-cycle generation in the start-up step of Figure 5, the generator 400 of Figure 15 and the voltage control logic as a whole. Circuit 250 further comprises a first branch 250', receiving signal S_{DUTY} and the periodic triangular signal S_{CARRIER1}, and a second branch 250", receiving signal S_{DUTY} and periodic triangular signal S_{CARRIER2} as input.

The first branch 250' comprises a first comparator 254 with two inputs and one output, configured to receive signal S_{DUTY} on a first input and periodic triangular signal S_{CARRIER1} on a second input and provide as output signal LVAH (and at the same time signal HVAH, corresponding to signal LVAH, as shown in Figure 10a) having a duty cycle defined on the basis of the comparison between the value of signal S_{DUTY} and the value of periodic triangular signal S_{CARRIER1}; a second comparator 256, similar to the first comparator 254, configured to receive periodic triangular signal S_{CARRIER1} on a first input and signal S_{D_OFF1} having a constant value (generated by a signal generator 258) on a second input, and provide as output a digital comparison signal S_{COMP1} having high logic value "1" when S_{CARRIER1} exceeds the threshold value defined by signal S_{D_OFF1} and low logic value "0" when S_{CARRIER1} has a value less than the threshold value defined by signal S_{D_OFF1}; an inverter 259, configured to receive as input signal LVAH generated by the first comparator 254 and to provide as output a signal /LVAH obtained by negating signal LVAH; a dead-time generator circuit 300 (of the type described and shown with reference to Figure 13), configured to receive as input signal /LVAH and a constant signal S_{D_ON1} (calculated as specified below with reference to Figure 13) suitable for regulating the duration of the dead time T_{D}, in this way enabling adjustment of the generator 300.

The dead-time generator 300 provides as output signal /LVAH_RIT, obtained by delaying signal /LVAH for a time that can be modified in the test phase, ranging from a few nanoseconds up to 2-3 microseconds; an XOR logic gate 264, receiving signal S_{COMP1} on a first input and signal /LVAH_RIT on a second input and generating as output an intermediate signal S_{INT1}, obtained from applying a logical XOR operation to signals S_{COMP1} and /LVAH_RIT; and an AND logic gate 268, receiving signal /LVAH_RIT on a first input and intermediate signal S_{INT1} on a second input and generating as output an intermediate signal S_{INT2}, obtained from applying a logical AND operation to signals S_{INT1} and /LVAH_RIT.

The second branch 250" of circuit 250 is substantially similar to the first branch 250' and comprises a third comparator 274 with two inputs and one output, configured to receive signal S_{DUTY} on a first input and periodic triangular signal S_{CARRIER2} on a second input and provide as output signal LVBH (and at the same time signal HVBH, corresponding to signal LVBH, as shown in Figure 10b) based on comparison between the value of signal S_{DUTY} and the value of periodic triangular signal S_{CARRIER2}; a fourth comparator 276, similar to the third comparator 274, configured to receive periodic triangular signal S_{CARRIER2} on a first input, signal S_{D_OFF2} having a constant value (generated by a signal generator 278) on a second input and provide as output a digital comparison signal S_{COMP2} having a high logic value "1" when S_{CARRIER2} exceeds the threshold defined by the value of signal S_{D_OFF2} and low logic value "0" when S_{CARRIER2} is less than the threshold defined by the value of signal S_{D_OFF2}; an inverter 279, configured to receive as input signal LVBH generated by the first comparator 274 and provide as output a signal /LVBH obtained by negating signal LVBH; a dead-time generator circuit 300 similar to dead-time generator circuit 300 (reference is made to Figure 13 in this case as well), configured to receive as input signal /LVBH and a signal S_{D_ON2} having a similar function to that already described with reference to signal S_{D_ON1} and the same value, and provide as output a signal /LVBH_RIT obtained by delaying signal /LVBH by a modifiable amount as needed, from a few nanoseconds to 2-3 microseconds; an XOR logic gate 284, receiving signal S_{COMP2} on a first input and signal /LVBH_RIT on a second input and generating as output an intermediate signal S_{INT3} obtained from applying a logical XOR operation to signals S_{COMP2} and /LVBH_RIT; and an AND logic gate 288, receiving signal /LVBH_RIT on a first input and intermediate signal S_{INT3} on a second input and generating as output an intermediate signal S_{INT4} obtained from applying logical AND operation to signals S_{INT3} and /LVBH_RIT.

Finally, the intermediate signals S_{INT2} and S_{INT4} generated as previously described are provided as input to an OR logic gate 290 that generates as output the signal ACASW (in particular, after a logical OR operation, signal ACASW has a high logic value "1" when at least one of intermediate signal S_{INT2} and intermediate signal S_{INT4} has high logic value "1").

It is possible to understand the purpose of generating the dead times with the dead-time generator circuit 300 by referring to Figures 12a-12g. Signal ACASW must be high when LVAH or LVBH are low. However, the switch-off of the transistors controlled by LVAH and LVBH, as well as transistor 66, is not instantaneous and so to prevent short-circuiting the capacitor 66, it is opportune to drive ACASW in a manner that introduces a delay both in switch-on and in switch-off. The switch-on delay is obtained by delaying signals /LVAH and /LVBH as already shown. To anticipate switch-off, a pulse signal, synchronous with carriers S_{CARRIER1} and S_{CARRIER2} and having a duration defined by constants S_{D_OFF1} and S_{D_OFF2}, is subtracted from signal /LVAH_RIT and signal /LVBH_RIT by means of the XOR and AND logic gates 264, 268, 284 and 288.

Figure 13 shows a dead-time generator circuit 300 for generating the dead times T_{D}. The circuit 300 receives an input signal S_{IN} (with particular reference to Figures 11 and 12a-12g, signal S_{IN} is, for example, the signal /LVAH or /LVBH) and provides as output a delayed signal S_{OUT} (always with reference to Figure 11, the delayed signal S_{OUT} is, for example, the signal /LVAH_RIT or /LVBH_RIT) having the leading edge delayed with regard to the respective leading edge of the input signal S_{IN} and a simultaneous trailing edge.

Circuit 300 comprises a modulo-N counter 301 (for example, modulo 2) having a clock input 301a to receive a clock signal CLK; a signal input 301b to receive an enabling signal ABIL; a preset value input 301c to receive signal S_{D_ON1} (or S_{D_ON2}) having a preset and constant value calculated by the formula S_{D_ON1}=S_{D_ON2}=MOD(N) - (T_{rit_des}·f_{clock}), where MOD(N) is the modulus of the counter 301 (e.g. 1000), T_{rit_des} is the desired time delay, f_{clock} is the frequency of the clock signal CLK in input to the counter 301; a reset input 301d, to receive a reset signal able to reset operation of the counter 301 so as to set a null output on the counter 301 when the input signal Sᵢₙ is null; and an output 301e, to provide a delayed output signal S_{OUT}.

Circuit 300 further comprises an AND logic gate, receiving as input the input signal S_{IN} and the negated delayed signal S_{OUT} provided in feedback from output 301e, which has the purpose of freezing the output of the counter when it takes a high logic value, delegating the task of returning it to the zero state to the reset 301d. The output of the AND logic circuit is the enabling signal ABIL.

Advantageously, circuit 300 is reprogrammable in a simple manner by changing the value of the preset signals S_{D_ON1} and S_{D_ON2}, calculated as previously shown.

To better understand the functioning of circuit 300, the functioning of the counters (binary, for example) is briefly summarized below. When enabled, the counters increment the output value on each clock pulse until the count reaches the maximum value that the counter can take (said modulo-N or MOD N). On the next clock pulse, signal S_{OUT} on output. 301e takes the high value and the count value returns to zero. On the next clock pulse, signal S_{OUT} returns to zero and the counter increments its output, and so on. It is possible to arrange for the counter 301 not to return to zero upon a reset, but to take a programmed value. This value can be programmed by making signal S_{D_ON1} (and S_{D_ON2}) on input 301c of counter 301 take a value other than zero and smaller than the full-scale value. In this way, the number of clock pulses necessary to reset the counter 301 will no longer be MOD(N), but MOD(N)-S_{D_ON1} (or, similarly, MOD (N) -S_{D_ON2}). Considering that the clock frequency is constant, by acting on the value of S_{D_ON1} (and S_{D_ON2}), it is possible to arrange for (assuming the counter 301 to be always enabled), two pulses of signal S_{OUT} separated from each other by a time of (MOD (N) -S_{D_ON1})·T_{clock} (or, similarly, (MOD(N)-S_{D_ON2})·T_{clock}). That is to say, the minimum value will be T_{clock} and the maximum value MOD(N)·T_{clock}. In addition to what has been said, circuit 300 provides the possibility of enabling the counter 301 on the leading edge of input Sin and locking the high level of signal S_{OUT} at the end of the count. The counter 301 will only be reset when S_{IN} takes the low logic value by acting directly on the reset input.

Figures 14a-14c show by way of example an input signal S_{IN} (Figure 14b) and a clock signal CLK (Figure 14c) in input to circuit 300, and a delayed signal S_{OUT} (Figure 14a) in output from circuit 300. It can be appreciated how the delayed signal S_{OUT} is only delayed with respect to the leading edge of the input signal S_{IN}.

With combined reference to Figures 11, 12a-12g and 13, it can be deduced that in boost mode and with a duty cycle greater than 50%, if the dead times T_{D} are excluded, ACASW has high logic value "1" when at least one of signal LVAH and signal LVBH has low logic value "0". Circuit 250 of Figure 11, introduces, through circuit 300 of Figure 13, opportune switch-on dead times T_{D}, while comparator 256 (together with signal generator 258 that generates signal S_{D_OFF1}, XOR logic gate 264 and AND logic gate 268), and, in a dual manner, comparator 276 (together with signal generator 278 that generates signal S_{D_OFF2}, XOR logic gate 284 and AND logic gate 288), introduces the dead times T_{D} having the function of avoiding, in use, a situation of short circuiting capacitor 66 when it is charged. There are two dead times T_{D} to introduce for the type of modulation chosen (synchronous PWM as illustrated in Figs. 6a-6d): one on the switch-on of transistor 64 (delay of leading edge of signal ACASW) and the other on the switch-off of transistor 64 (switching off transistor 64 in advance with respect to the leading edge of signals LVAH and LVBL and, alternatively, in advance of the leading edge of signals LVBH and LVAL) .

Summarizing, the dead time T_{D} preceding the switch-on of transistor 64 (delay of leading edge of ACASW) is obtained from signal /LVAH or /LVBH, using the dead-time generator circuit 300.

The dead time T_{D} following the switch-off of transistor 64 (delay of leading edge of signals LVAH and LVBL and, alternatively, delay of leading edge of signals LVBH and LVAL) is obtained by exploiting the periodicity of the periodic triangular signals S_{CARRIER1} and S_{CARRIER2}. As shown in Figures 12a-12g, the dead times T_{D} after the trailing edge of signal ACASW are defined by the length of time during which at least one of the periodic triangular signals S_{CARRIER1} and S_{CARRIER2} takes a value greater than the respective threshold. By opportunely setting the value of the thresholds S_{D_OFF1} and S_{D_OFF2}, it is therefore possible to define the duration of the dead time T_{D} following the trailing edge of signal ACASW. In particular, signal ACASW passes from the high logic value "1" to the low logic value "0" each time one of the two following conditions occurs: S_{CARRIER1}=S_{D_OFF1} or S_{CARRIER2}=S_{D_OFF2}. The dead time T_{D} following the trailing edge of signal ACASW lasts as long as S_{CARRIER1}>S_{D_OFF1} or S_{CARRIER2}>S_{D_OFF2}.

Figure 15 shows a generator 400 to generate a duty cycle signal S_{DUTY} defining a variable duty cycle value with ramp up and current limitation, used in the soft start-up step. The generator 400 comprises a counter 401, having an enabling input 401a to receive an operation-enabling signal, a clock input 401b receiving a clock signal CLK and an output 401c providing the duty cycle signal S_{DUTY}.

The generator 400 further comprises a comparator 406 receiving a reference current value I_{MAX} (the maximum current that the bi-directional converter 100 can support without damaging itself) on a first input and value of the current I_{L} that flows through the inductor 60 on a second input, and provides a logical "1" or "0" value in output. This logical value is supplied to a further input 401d of the counter 401 and controls the incrementing or decrementing of the duty cycle signal S_{DUTY} in output from the counter 401, on the basis of comparison between the reference current value I_{MAX} and the measured current value. In particular, as long as the condition I_{L}>I_{MAX} remains, the duty cycle is decremented by the counter 401 in successive steps; conversely, in the case where I_{L}<I_{MAX}, the duty cycle is incremented in successive steps. The comparator 406 has the function of a current overload limiter, and can set a drop in the duty cycle down to zero if the measured current I_{L} is greater than the reference current I_{MAX}. which represents the maximum acceptable current, defined in the design phase. In this way, protection is provided against starting up the bi-directional converter 100 with a shortcircuited output.

The soft start-up is obtained by initially excluding the voltage control performed by the digital signal processor 124 (as previously shown) and making the bi-directional converter 100 start with a duty cycle that ramps up until the output voltage reaches the desired control value, or the duty cycle reaches a maximum acceptable value (defined in the design phase). The control is then enabled, requiring that its output is equal to that taken by the signal provided at output 401c at the end of step 113 or step 213, depending on the operating mode (buck or boost).

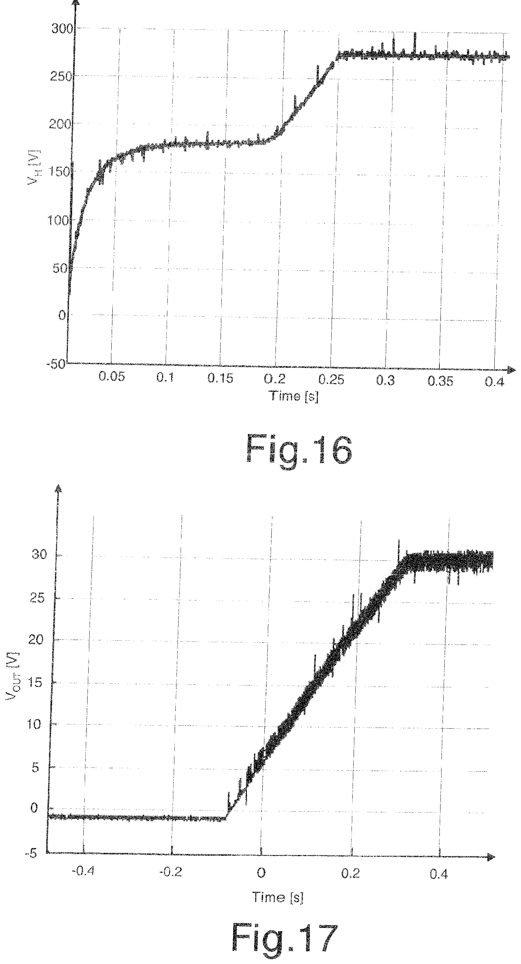

When the DC-DC conversion device 1 is configured to operate in boost mode, in the soft start-up step the duty cycle is made to change with a ramp-up (via circuit 400 of Figure 15), from zero until reaching a value corresponding to the desired output voltage (after which, except for the voltage control performed by the digital signal processor 124, the duty cycle will be regulated in a known manner), the output voltage of the bi-directional converter 100 then assuming a characteristic double dip profile, related to the variation in modulation as shown in Figures 6a-6d and Figures 7a-7f. Figure 16 shows a waveform of the output voltage (voltage V_{H}) during start-up of the bi-directional converter 100 in boost mode.

Figure 17 shows a waveform of the output voltage (voltage V_{L}) during start-up of the bi-directional converter 100 in buck mode.

The advantages that can be achieved with the device made according to the present invention are evident from examination of its characteristics.

The bi-directionality of operation has been achieved using the same hardware, opportunely driven, in both buck and boost operating modes, with the possibility of controlling the converter in a "zero state" to allow inversion between the step-up and step-down operating modes.

In addition, the converter according to the present invention is a scalable, high-power converter with the advantage of reduced bulk and reduced weight.

Furthermore, the converter according to the present invention is able to handle interfacing with external power buses without external intervention. In fact, thanks to the described precharging and driving method, the converter according to the present invention is able to interface with unknown power buses (whether active or passive), automatically and safely handling the charging of the capacitors for step-up and step-down operations. In addition, the inductor 60 and the capacitors 22 and 66 are exploited as a LC-type input/output (active clamp branch 56 disconnected) or CLC-type filter (active clamp branch 56 connected), also improving the quality of the voltages/currents.

Lastly, the converter according to the present invention is able to correctly operate even if voltage/current sources are present on both power buses, enabling buck and boost operating modes for both of them and start-up with zero output voltage and even with no load connected (and connection of internal load) .

Finally, it is understood that changes and modifications may be made to what is described and illustrated herein without leaving the scope of protection of the present invention, as defined in the appended claims.

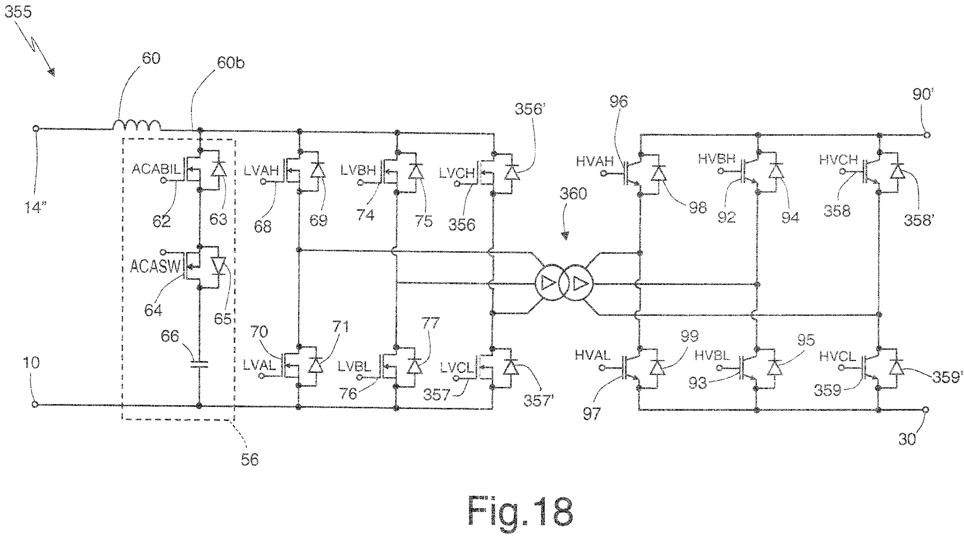

For example, Figure 18 shows a converter 355 with a three-phase transformer 360, utilizable as an alternative to the isolated boost full bridge converter 55 of Figure 3. In addition to the elements already described with reference to the isolated boost full bridge converter 55 of Figure 3 (and indicated with the same reference numerals), the converter 355 comprises additional transistors 356 and 357, connected in series to one another to form a branch connected in parallel to the active clamp branch 56. The converter 355 further comprises additional transistors 358 and 359, connected in series with each other between the fifth node 90' and the third electrical branch 30. The primary and secondary windings of the three-phase transformer, of known type, are indicated as a whole by reference numeral 360.

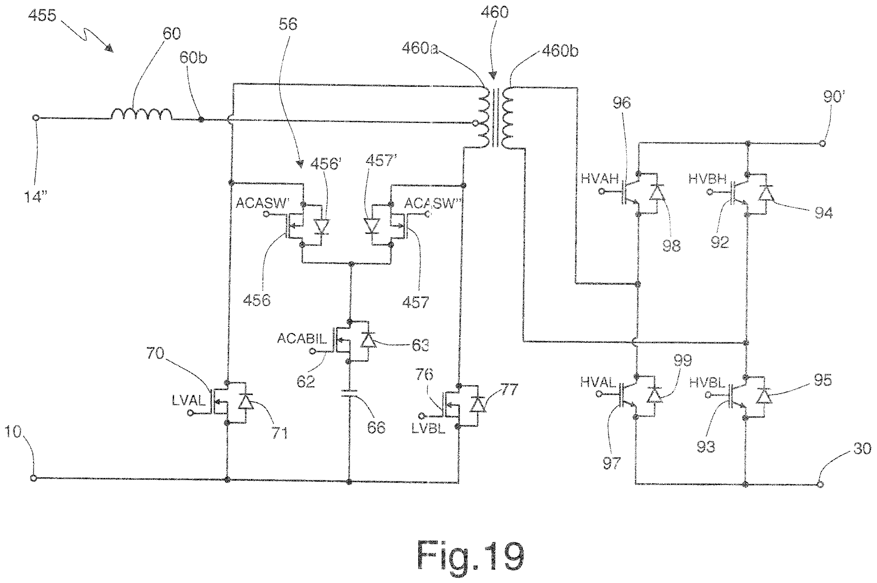

Figure 19 shows a converter 455 with a center tap transformer 460 (boost push-pull with bypassable active clamp branch). In this case, unlike that shown in Figure 3 (the same elements are indicated with the same reference numerals in this case as well), transistor 64, controlled by signal ACASW, is substituted by two transistors 456 and 457 (both with a diode in antiparallel configuration) connected between a same conduction terminal of transistor 62 controlled by signal ACABIL and a respective first and second conduction terminal of the primary winding 460a of the center tap transformer 460. A third terminal of the center tap transformer 460 is connected to the second terminal 60b. The opening/closing of transistors 456 and 457 is controlled by respective signals ACASW' and ACASW", to implement, with the opportune changes due to the presence of the center tap transformer 460 and evident to a skilled person, the control method according to the present invention. Transistor 70 is connected between the first conduction terminal of the primary winding 460a of the center tap transformer 460 and the first electrical branch 10, and transistor 76 is connected between the second conduction terminal of the primary winding 460a of the center tap transformer 460 and the first electrical branch 10.

Transistor 456, transistor 62 and capacitor 66 are connected in series to one another; in addition, the series of transistor 456, transistor 62 and capacitor 66 is connected in parallel to transistor 70. Similarly, transistor 457, transistor 62 and capacitor 66 are connected in series to one another, and the series of transistor 457, transistor 62 and capacitor 66 is connected in parallel to transistor 76. In this way, in use, it is possible to act on signals ACASW' and ACASW" to bypass/enable both transistors 70 and 76, in order to implement the method according to the present invention as previously described.

It is evident that the configurations shown in Figures 18 and 19 are by way of example. Other circuit implementations are possible without leaving the scope of the present invention. For example, it is possible to implement a half-bridge type converter comprising (making reference to Figure 3) transistors 68 and 70 and transistors 96 and 97, and not transistors 74 and 76 and transistors 92 and 93 (or, vice versa, transistors 74 and 76 and transistors 92 and 93, and non transistors 68 and 70 and transistors 96 and 97).

## Claims

1. A bi-directional DC-DC converter (100) comprising a first cell (50) to convert a first DC voltage value to a second DC voltage value, said first cell (50) being connectable between a first region (2) having a first potential and a second region (4) having a second potential and comprising:
- a first converter network (68, 70, 74, 76) couplable to the first region (2);
- a second converter network (92, 93, 96, 97) couplable to the second region (4);
- a transformer (80) couplable to the first region (2) by means of the first converter network and to the second region (4) by means of the second converter network,
**characterized in that** it further comprises:
- an active clamp branch (56), connected in parallel to the first converter network (68, 70) and including an enabling switch (62), a commutator switch (64) and a first capacitor (66) connected in series to one another,
- a first inductor (60) connected between a conduction terminal of the enabling switch (62) and the first region (2); and
- a second capacitor (22) connected to the first inductor (60) so as to form, during a step-down voltage operating mode of the bi-directional converter (100), an LC output filter of the converter (100), and so as to form, with the first inductor (60) and first capacitor (66), during a step-up voltage operating mode of the bi-directional converter (100), a CLC input filter of the converter (100),
said enabling switch (62) being kept open during the step-down voltage operating mode so as to exclude the active clamp branch (56), and being kept closed during the step-up voltage operating mode so as to connect the active clamp branch (56), the switching of said commutator switch (64) being controlled during said step-up voltage operating mode by means of a switching signal (ACASW) having a duty cycle increasing by preset steps from a minimum duty-cycle value.

2. The converter according to claim 1, wherein said minimum duty-cycle value is 0%.

3. The converter according to any of the preceding claims, wherein said first converter network comprises at least one first switching element (70) and a second switching element (76), wherein the active clamp branch (56) comprises a first portion connected in parallel to the first switching element and a second portion connected in parallel to the second switching element.

4. The converter according to claim 1 or 2, wherein the first converter network comprises a first pair of switching elements (68, 70) including a first switching element (68) and a second switching element (70) connected in series to one another, the second converter network comprises a second pair of switching elements (92, 93) including a third switching element (92) and a fourth switching element (93) connected in series to one another, and wherein the active clamp branch (56) is connected in parallel to the first pair of switching elements (68, 70).

5. The converter according to claim 4 further comprising a third pair of switching elements (74 and 76) including a fifth switching element (74) and a sixth switching element (76) connected in series to one another, and a fourth pair of switching elements (96, 97) including a seventh switching element (96) and an eighth switching element (97) connected in series to one another, the third pair of switching elements being connected in parallel to the first pair of switching elements and the fourth pair of switching elements being connected in parallel to the second pair of switching elements.

6. The converter according to any one of the preceding claims, wherein said first cell (50) is also connected to the first region (2) by means of a first power interface (6), said first power interface (6) comprising:
- a first coupling switch (14);
- a first control branch (20, 22, 24) including the second capacitor (22), a first resistor (20) and a first bypass switch (24), the first resistor (20) and the second capacitor (22) being connected in series to one another, and the first bypass switch (24) being connected in parallel to the first resistor (20),
said coupling switch (14) being operable to electrically couple and, alternatively, decouple the first cell (50) from the first region (2),
said first bypass switch (24) being open during a step of charging the second capacitor (22) and closed during a step of discharging the second capacitor (22).

7. The converter according to claim 6, wherein said first power interface (6) further comprises a first voltage meter (26) configured to measure a voltage value at the end terminals of said first region (2).

8. The converter according to any of the preceding claims, wherein said first cell (50) is also connected to the second region (4) by means of a second power interface (8), said second power interface (8) comprising a second coupling switch (34), a second control branch (40, 42, 44) including a second resistor (40), a third capacitor (42) and a second bypass switch (44), the second resistor (40) and the third capacitor (42) being connected in series to one another, and the second bypass switch (44) being connected in parallel to the second resistor (40), said second coupling switch (34) being operable to electrically couple and, alternatively, decouple the first cell (50) from the second region (4), said second bypass switch (44) being open during a step of charging the third capacitor (42) and closed during a step of discharging the third capacitor (42).

9. The converter according to claim 8, wherein said second power interface (8) further comprises a second voltage meter (46) configured to measure a voltage value at the end terminals of said second region (4).

10. The converter according to any of the preceding claims, wherein said first region (2) comprises a first load branch (16, 18) including a first load resistor (16) and a first load switch (18) connected in series to one another, said first load switch (18) being switched on to connect said first load resistor (16) during the step-down voltage operating mode.

11. The converter according to any of the preceding claims, wherein said second region (4) comprises a second load branch (36, 38) including a second load resistor (36) and a second load switch (38) connected in series to one another, said first load switch (38) being switched on to connect said first load resistor (36) during the step-up voltage operating mode.

12. The converter according to any of the preceding claims comprising a second cell (50) of the same type as said first cell (50), the first and the second cell (50) being connected in parallel to one another.

13. A method for driving a bi-directional DC-DC converter (100) comprising a first cell (50) connected between a first region (2) having a first potential and a second region (4) having a second potential, the first cell (50) including a first converter network (68, 70, 74, 76); a second converter network (92, 93, 96, 97); a transformer (80) couplable to the first region (2) by means of the first converter network and to the second region (4) by means of the second converter network; an active clamp branch (56) connected in parallel to the first converter network and including an enabling switch (62), a commutator switch (64) and a first capacitor (66) connected in series to one another; a first inductor (60) connected between a conduction terminal of the enabling switch (62) and the first region (2); and a second capacitor (22) connected to the first inductor (60) so as to form, during a step-down voltage operating mode of the bi-directional converter (100), an LC output filter of the converter(100), and so as to form, with the first inductor (60) and first capacitor (66), during a step-up voltage operating mode of the bi-directional converter (100), a CLC input filter of the converter (100),
the method comprising the steps of:
- opening, during the step-down voltage operating mode of the bi-directional converter (100), the enabling switch (62), so as to isolate the active clamp branch (56);
- closing, during the step-up voltage operating mode of the bi-directional converter (100), the enabling switch (62), so as to connect the active clamp branch (56);
- generating a switching signal (ACASW) having a duty cycle increasing by preset steps from a minimum value; and
- switching the commutator switch (64) by means of said switching signal (ACASW) during the step-up voltage operating mode.

14. The method according to claim 13, wherein said minimum value is 0%.

15. The method according to claim 13 or 14, wherein the first converter network comprises a first pair of switching elements (68, 70) including switching elements connected in series to one another, the first pair of switching elements being connected in parallel to the active clamp branch (56), the method comprising, during said steps of switching on the enabling switch (62) and the commutator switch (64), the step of opening at least one of the switching elements of the first pair of switching elements.

16. The method according to claim 15, wherein the first converter network comprises a second pair of switching elements (74 and 76) including switching elements connected in series to one another, the second pair of switching elements being connected in parallel to the active clamp branch (56), the method comprising, during said steps of switching on the enabling switch (62) and the commutator switch (64), the step of opening at least one of the switching elements of the first or second pair of switching elements.

17. The method according to any of claims 13-16, wherein said first cell (50) is also connected to the first region (2) by means of a first power interface (6), said first power interface (6) comprising a first coupling switch (14); and a first control branch (20, 22, 24) including a first resistor (20), a second capacitor (22) and a first bypass switch (24), the first resistor (20) and the second capacitor (22) being connected in series to one another, and the first bypass switch (24) being connected in parallel to the first resistor (20),
said first cell (50) also being connected to the second region (4) by means of a second power interface (8) including a second control branch (40, 42, 44) having a third capacitor (42), and a first load branch (36, 38) formed by a first load resistor (36) and a second load switch (38) connected in series to one another,
the method further comprising, before operating the bi-directional converter in a step-up operating mode, the steps of:
- closing the coupling switch (14) by electrically coupling the first cell (50) to the first region (2);
- opening the first bypass switch (24), thereby charging the third capacitor (22) exclusively through the first resistor (20) ;
- detecting a voltage value of the second region (4) and comparing the detected voltage value with a reference voltage value and, in the case where said detected value is less than said reference value, performing the steps of:
- closing the second load switch (38) so as to connect a first load (36) to the second power interface (8);
- increasing the value of the duty cycle of the switching signal (ACASW) by preset steps from a duty cycle value of 0%;
- charging the third capacitor (42);
- opening the second load switch (38), thereby disconnecting the first load (36);
- electrically connecting the second power interface (8) to the second region (4);
- transferring an electric charge from the third capacitor (42) to the second region (4).

18. The method according to claim 17 wherein said second power interface (8) further comprises a second coupling switch (34); and wherein the second control branch (40, 42, 44) further comprises a second resistor (40) and a second bypass switch (44), the second resistor (40) and the third capacitor (42) being connected in series to one another, and the second bypass switch (44) being connected in parallel to the second resistor (40),
said first power interface (6) further comprising a first load branch (16, 18) including a second load resistor (16) and a second load switch (18) connected in series to one another, the method further comprising, before operating the bi-directional converter in a step-down operating mode, the steps of:
- closing the second coupling switch (34), thereby electrically coupling the first cell (50) to the second region (2);
- opening the second bypass switch (44), thereby charging the fourth capacitor (42) exclusively through the second resistor (40) ;
- detecting a voltage value of the first region (2) and comparing the detected voltage value with a second reference voltage value and, in the case where said detected value is less than said second reference value, performing the steps of:
- closing the first load switch (18) by connecting a second load (16) internal to the first power interface (6);
- increasing the value of the duty cycle of the switching signal (ACASW) by preset steps from a duty cycle value of 0%;
- charging the third capacitor (22);
- opening the first load switch (18), thereby disconnecting the second load (16);
- electrically connecting the first power interface (6) to the first region (2);
- transferring an electric charge from the third capacitor (22) to the first region (2).

## Patentansprüche

1. Bidirektionaler Gleichspannungswandler (100) aufweisend eine erste Zelle (50), um einen ersten Gleichspannungswert in einen zweiten Gleichspannungswert zu konvertieren, wobei die erste Zelle (50) verbindbar zwischen einer ersten Region (2) mit einem ersten Potenzial und einer zweiten Region (4) mit einem zweiten Potenzial ist, aufweisend:
- ein erstes Wandlernetzwerk (68, 70, 74, 76) koppelbar mit der ersten Region (2);
- ein zweites Wandlernetzwerk (92, 93, 96, 97) koppelbar mit der zweiten Region (4);
- einen Transformator (80), welcher koppelbar an die erste Region (2) durch Mittel des ersten Wandlernetzwerkes und an die zweite Region (4) durch Mittel des zweiten Wandlernetzwerkes ist,
**dadurch gekennzeichnet, dass** es weiterhin aufweist:
- einen aktiven Klemmzweig (56), welcher parallel zu dem ersten Wandlernetzwerk (68, 70) verbunden ist und einen ersten Freigabeschalter (62), einen Kommutatorschalter (64) und eine erste Kapazität (66) aufweist, welche in Serie miteinander verbunden sind,
- eine erste Induktivität (60), welche zwischen einem leitenden Anschluss des Freigabeschalters (62) und der ersten Region (2) verbunden ist; und
- eine zweite Kapazität (22), welche mit der ersten Induktivität (60) verbunden ist, um während des Abwärtsspannungsbetriebsmodus des bidirektionalen Wandlers (100) einen LC-Ausgangsfilter des Wandlers (100) auszubilden und um mit der ersten Induktivität (60) und der ersten Kapazität (66) während eines Aufwärtsspannungsbetriebsmodus des bidirektionalen Wandlers (100) ein CLC-Eingangsfilter des Wandlers (100) auszubilden,
wobei der Freigabeschalter (62), während der Abwärtsspannungsbetriebsmodus offengehalten wird, um den aktiven Klemmzweig (56) auszunehmen und geschlossen gehalten wird, während des Aufwärtsspannungsbetriebsmodus um den aktiven Klemmzweig (56) zu verbinden, wobei das Schalten des Kommmutatorschalters (64), während des Aufwärtsspannungsbetriebsmodus durch Mittel eines Schaltsignals (ACASW) mit einem Tastverhältnis, welches sich durch vorbestimmte Schritte von einem minimalen Tastverhältniswert erhöht, gesteuert wird.

2. Wandler nach Anspruch 1,
wobei der minimale Tastverhältniswert 0 % ist.

3. Wandler nach einem der vorangehenden Ansprüche,
wobei das erste Wandlernetzwerk mindestens ein erstes Schaltelement (70) und ein zweites Schaltelement (76) aufweist, wobei der aktive Klemmzweig (56) einen ersten Bereich, welcher parallel zu dem ersten Schaltelement verbunden ist und einen zweiten Bereich aufweist, welcher parallel zu dem zweiten Schaltelement verbunden ist.

4. Wandler nach Anspruch 1 oder 2,
wobei das erste Wandlernetzwerk ein erstes Paar von Schaltelementen (68, 70) mit einem ersten Schaltelement (68) und einem zweiten Schaltelement (70), welche in Serie zueinander verbunden sind, aufweist, wobei das zweite Wandlernetzwerk ein zweites Paar von Schaltelementen (92, 93) mit einem dritten Schaltelement (92) und einem vierten Schaltelement (93) aufweist, welche in Serie zueinander verbunden sind, und wobei der aktive Klemmzweig (56) parallel zu dem ersten Paar von Schaltelementen (68, 70) verbunden ist.

5. Wandler nach Anspruch 4, des Weiteren aufweisend ein drittes Paar von Schaltelementen (74 und 76) mit einem fünften Schaltelement (74) und einem sechsten Schaltelement (76), welche in Serie zueinander verbunden sind, und ein viertes Paar von Schaltelementen (96, 97) mit einem siebten Schaltelement (96) und einem achten Schaltelement (97), welche in Serie zueinander verbunden sind, wobei das dritte Paar von Schaltelementen parallel zu dem ersten Paar von Schaltelementen verbunden ist, und das vierte Paar von Schaltelementen parallel zu dem zweiten Paar von Schaltelementen verbunden ist.

6. Wandler nach einem der vorangehenden Ansprüche,
wobei die erste Zelle (50) auch mit der ersten Region (2) durch Mittel einer ersten Leistungsschnittstelle (6) verbunden ist, wobei die erste Leistungsschnittstelle (6) aufweist:
- einen ersten Koppelschalter (14);
- einen ersten Steuerzweig (20, 22, 24) mit der zweiten Kapazität (22), einem ersten Widerstand (20) und einem ersten Bypass-Schalter (24), wobei der erste Widerstand (20) und die zweite Kapazität (22) in Serie miteinander verbunden sind, und der erste Bypass-Schalter (24) parallel zu dem ersten Widerstand (20) verbunden ist,
wobei der Koppelschalter (14) betreibbar ist, um die erste Zelle (50) mit der ersten Region (2) zu koppeln und alternativ zu entkoppeln,
wobei der erste Bypass-Schalter (24) offen ist während eines Schrittes des Ladens der zweiten Kapazität (22) und geschlossen ist während eines Schrittes des Entladens der zweiten Kapazität (22).

7. Wandler nach Anspruch 6,
wobei die erste Leistungsschnittstelle (6) des Weiteren ein erstes Voltmeter (26), welches konfiguriert ist, um einen Spannungswert an dem Endanschluss der ersten Region (2) zu messen, aufweist.

8. Wandler nach einem der vorangehenden Ansprüche,
wobei die erste Zelle (50) auch mit der zweiten Region (4) durch Mittel einer zweiten Leistungsschnittstelle (8) verbunden ist, wobei die zweite Leistungsschnittstelle (8) einen zweiten Koppelschalter (34), einen zweiten Steuerzweig (40, 42, 44) mit einem zweiten Widerstand (40), einer dritten Kapazität (42) und einem zweiten Bypass-Schalter (44) aufweist, wobei der zweite Widerstand (40) und die dritte Kapazität (42) in Serie miteinander verbunden sind und der zweite Bypass-Schalter (44) parallel zu dem Widerstand (40) verbunden ist, wobei der zweite Koppelschalter (43) betreibbar ist, die erste Zelle (50) mit der zweiten Region (4) zu koppeln und alternativ zu entkoppeln, wobei der zweite Bypass-Schalter (44) offen ist während eines Schrittes des Ladens der dritten Kapazität (42) und geschlossen ist während eines Schrittes des Entladens der dritten Kapazität (42).

9. Wandler nach Anspruch 8,
wobei die zweite Leistungsschnittstelle des Weiteren aufweist, ein zweites Voltmeter (46), welches konfiguriert ist, um einen Spannungswert an dem Endanschluss der zweiten Region (4) zu messen.

10. Wandler nach einem der vorangehenden Ansprüche,
wobei die erste Region (2) einen ersten Ladezweig (16, 18) mit einem ersten Ladewiderstand (16) und einem ersten Ladeschalter (18), welche in Serie miteinander verbunden sind, aufweist, wobei der erste Ladeschalter (18) angeschaltet ist, um den ersten Ladewiderstand (16) während des Abwärtsspannungsbetriebsmodus zu verbinden.

11. Wandler nach einem der vorangehenden Ansprüche,
wobei die zweite Region (4) einen zweiten Ladezweig (36, 38) mit einem zweiten Ladewiderstand (36) und einem zweiten Ladeschalter (38), welche in Serie miteinander verbunden sind, aufweist, wobei der erste Ladeschalter (38) geschaltet ist, um den ersten Ladewiderstand (36) während des Aufwärtsspannungsbetriebsmodus zu verbinden.

12. Wandler nach einem der vorangehenden Ansprüche, aufweisend eine zweite Zelle (50) desselben Typs wie die erste Zelle (50), wobei die erste und die zweite Zelle (50) parallel zueinander verbunden sind.

13. Verfahren zum Betreiben eines bidirektionalen Gleichspannungswandlers (110), aufweisend eine erste Zelle (50), welche verbunden ist zwischen einer ersten Region (2), welche ein erstes Potenzial hat und einer zweiten Region (4), welche ein zweites Potenzial hat, wobei die erste Zelle (50) aufweist: ein erstes Wandlernetzwerk (68, 70, 74, 76); ein zweites Wandlernetzwerk (92, 93, 96, 97); einen Transformator (80), welcher koppelbar an die erste Region (2) durch Mittel des ersten Wandlernetzwerkes und an die zweite Region (4) durch Mittel des zweiten Wandlernetzwerkes ist; einen aktiven Klemmzweig (56), welcher parallel zu dem ersten Wandlernetzwerk verbunden ist und einen Freigabeschalter (62), einen Kommutatorschalter (64) und eine erste Kapazität (66), welche in Serie miteinander verbunden sind, aufweist; eine erste Induktivität (60), welche zwischen einem leitenden Anschluss des Freigabeschalters (62) und der ersten Region (2) verbunden ist; und eine zweite Kapazität (22), welche mit der ersten Induktivität (60) so verbunden ist, um während des Abwärtsspannungsbetriebsmodus des bidirektionalen Gleichspannungswandlers (100) einen LC-Ausgangsfilter des Wandlers (100) auszubilden und um mit der ersten Induktivität (60) und der ersten Kapazität (66) während eines Aufwärtsspannungsbetriebsmodus des bidirektionalen Wandlers (100) einen CLC-Eingangsfilter des Wandlers (100) auszubilden,
das Verfahren weist die Schritte auf:
- Öffnen des Freigabeschalters (62) während des Abwärtsspannungsbetriebsmodus des bidirektionalen Wandlers (100), um den aktiven Klemmzweig (56) zu isolieren;
- Schließen des Freigabeschalters (62) während des Aufwärtsspannungsbetriebsmodus des bidirektionalen Wandlers (100), um den aktiven Klemmzweig (56) zu verbinden;
- Erzeugen eines Schaltsignales (ACASW) mit einem Tastverhältnis, welches sich durch vorbestimmte Schritte von einem minimalen Tastverhältnis erhöht; und
- Schalten des Kommutatorschalters (64) durch Mittel des Schaltsignales (ACASW) während des Aufwärtsspannungsbetriebsmodus.

14. Verfahren nach Anspruch 13,
wobei der Minimalwert 0 % ist.

15. Verfahren nach Anspruch 13 oder 14,
wobei das erste Wandlernetzwerk ein erstes Paar von Schaltelementen (68, 70) mit Schaltelementen, welche in Serie zueinander geschaltet sind, aufweist, wobei das erste Paar von Schaltelementen parallel zu dem aktiven Klemmzweig (56) verbunden ist, wobei das Verfahren aufweist, während des Schrittes des Schaltes des Freigabeschalters (62) und des Kommutatorschalters (64) den Schritt des Öffnens mindestens eines der Schaltelemente des ersten Paares von Schaltelementen.

16. Verfahren nach Anspruch 15,
wobei das erste Wandlernetzwerk ein zweites Paar von Schaltelementen (74 und 76) mit Schaltelementen, welche in Serie zueinander geschaltet sind, aufweist, wobei das zweite Paar von Schaltelementen parallel zu den aktiven Klemmzweig (56) verbunden ist, wobei das Verfahren aufweist, während des Schrittes des Schaltes des Freigabeschalters (62) und des Kommutatorschalters (64) den Schritt des Öffnens von mindestens einem der Schaltelemente des ersten oder zweiten Paares von Schaltelementen.

17. Verfahren nach einem der Ansprüche 13 bis 16;
wobei die erste Zelle (50) auch mit der ersten Region (2) durch Mittel einer ersten Leistungsschnittstelle (6) verbunden ist, wobei die erste Leistungsschnittstelle (6) einen ersten Koppelschalter (14); und einen ersten Steuerzweig (20, 22, 24) mit einem ersten Widerstand (20), einer zweiten Kapazität (22) und einem ersten Bypass-Schalter (24) aufweist, wobei der erste Widerstand (20) und die zweite Kapazität (22) in Serie zueinander verbunden sind, und wobei der erste Bypass-Schalter (24) parallel zu dem ersten Widerstand (20) verbunden ist,
wobei die erste Zelle (50) auch mit der zweiten Region (4) durch Mittel einer zweiten Leistungsschnittstelle (8) verbunden ist, aufweisend einen zweiten Steuerzweig (40, 42, 44) mit einer dritten Kapazität (42) und einem ersten Ladezweig (36, 38), welcher mit einem ersten Ladewiderstand (36) und einem zweiten Ladeschalter (38), welche in Serie zueinander verbunden sind, ausgebildet ist, wobei das Verfahren des Weiteren aufweist, vor dem Betrieb des bidirektionalen Gleichspannungswandlers in einem Aufwärtsspannungsbetriebsmodus die Schritte:
- Schließen des Koppelschalters (14) durch elektrisches Koppeln der ersten Zelle (50) an die erste Region (2);
- Öffnen des ersten Bypass-Schalters (24), wobei die dritte Kapazität (22) exklusiv durch den ersten Widerstand (20) geladen wird;
- Detektieren eines Spannungswertes der zweiten Region (4) und Vergleichen des detektierten Spannungswertes mit einem Referenzspannungswert und in dem Fall, in dem der detektierte Wert geringer als der Referenzwert ist, Ausführen der Schritte:
- Schließen des zweiten Ladeschalters (38), um eine erste Last (36) mit der zweiten Leistungsschnittstelle (8) zu verbinden;
- Erhöhen des Wertes des Tastverhaltens des Schaltsignals (ACASW) durch vorbestimmte Schritte von einem Tastverhältniswert von 0 %;
- Aufladen der dritten Kapazität (42);
- Öffnen des zweiten Ladeschalters (38), womit die erste Last (36) getrennt wird;
- elektrisches Verbinden der zweiten Leistungsschnittstelle (8) mit der zweiten Region (4);
- Transferieren von elektrischer Ladung von der dritten Kapazität (42) zur zweiten Region (4).

18. Verfahren nach Anspruch 17,
wobei die zweite Leistungsschnittstelle (8) des Weiteren aufweist, einen zweiten Koppelschalter (34); und
wobei der zweite Kontrollzweig (40, 42, 44) des Weiteren aufweist, einen zweiten Widerstand (40) und einen zweiten Bypass-Schalter (44), wobei der zweite Widerstand (40) und die dritte Kapazität (42) in Serie zueinander verbunden sind und der zweite Bypass-Schalter (44) parallel zu dem zweiten Widerstand (40) verbunden ist,
wobei die erste Leistungsschnittstelle (6) des Weiteren aufweist, einen ersten Ladezweig (16, 18) aufweisend einen zweiten Ladewiderstand (16) und einen zweiten Ladeschalter (18), welche in Serie zueinander verbunden sind,
wobei das Verfahren vor Betreiben des bidirektionalen Gleichspannungswandlers in einem Aufwärtsspannungsbetriebsmodus die Schritte aufweist:
- Schließen des zweiten Koppelschalters (34), wobei die erste Zelle (50) mit der zweiten Region (2) elektrisch gekoppelt wird;
- Öffnen des zweiten Bypass-Schalters (44), wobei die dritte Kapazität (42) exklusiv durch den zweiten Widerstand (40) geladen wird;
- Detektieren eines Spannungswertes der ersten Region (2) und Vergleichen des detektierten Spannungswertes mit einem zweiten Referenzspannungswert und in dem Fall, indem der detektierte Wert geringer als der zweite Referenzwert ist, Ausführen der Schritte:
- Schließen des ersten Ladeschalters (18) durch internes Verbinden einer zweiten Last (16) mit der ersten Leistungsschnittstelle (6);
- Erhöhen des Wertes des Tastverhältnisses des Schaltsignals (ACASW) durch vorgegebene Schritte von einem Tastverhältniswert von 0 %;
- Aufladen der dritten Kapazität (22);
- Bedienen des ersten Ladeschalters (18), wobei die zweite Last (16) getrennt wird;
- elektrisches Verbinden der ersten Leistungsschnittstelle (6) an die erste Region (2);
- Transferieren einer elektrischen Ladung von der dritten Kapazität (22) zu der ersten Region (2).

## Revendications

1. Convertisseur bidirectionnel CC-CC (100), comprenant une première cellule (50) pour convertir une première valeur de tension CC en une seconde valeur de tension CC, ladite première cellule (50) étant connectable entre une première région (2) ayant un premier potentiel et une seconde région (4) ayant un second potentiel et comprenant :
- un premier réseau convertisseur (68, 70, 74, 76) couplable à la première région (2) ;
- un second réseau convertisseur (92, 93, 96, 97) couplable à la seconde région (4) ;
- un transformateur (80) couplable à la première région (2) au moyen du premier réseau convertisseur et à la seconde région (4) au moyen du second réseau convertisseur,
**caractérisé en ce qu'**il comprend en outre :
- une branche de rattachement actif (56), connectée en parallèle au premier réseau convertisseur (68, 70) et incluant un interrupteur d'activation (62), un interrupteur de commutation (64) et un premier condensateur (66) connectés en série les uns aux autres,
- un premier inducteur (60) connecté entre une borne de conduction de l'interrupteur d'activation (62) et la première région (2) ; et
- un deuxième condensateur (22) connecté au premier inducteur (60) afin de former, au cours d'un mode de fonctionnement à tension abaissée du convertisseur bidirectionnel (100), un filtre de sortie LC du convertisseur (100), et afin de former, avec le premier inducteur (60) et le premier condensateur (66), au cours d'un mode de fonctionnement à tension relevée du convertisseur bidirectionnel (100), un filtre d'entrée CLC du convertisseur (100),
ledit interrupteur d'activation (62) étant maintenu ouvert au cours du mode de fonctionnement à tension abaissée afin d'exclure la branche de rattachement actif (56), et étant maintenu fermé au cours du mode de fonctionnement à tension relevée afin de connecter la branche de rattachement actif (56), la commutation dudit interrupteur de commutation (64) étant contrôlée au cours dudit mode de fonctionnement à tension relevée au moyen d'un signal de commutation (ACASW) ayant un rapport cyclique croissant par étapes prédéfinies à partir d'une valeur de rapport cyclique minimale.

2. Convertisseur selon la revendication 1, dans lequel ladite valeur de rapport cyclique minimale est 0 %.

3. Convertisseur selon l'une quelconque des revendications précédentes, dans lequel ledit premier réseau convertisseur comprend au moins un premier élément de commutation (70) et un deuxième élément de commutation (76), dans lequel la branche de rattachement actif (56) comprend une première partie connectée en parallèle au premier élément de commutation et une seconde partie connectée en parallèle au deuxième élément de commutation.

4. Convertisseur selon la revendication 1 ou 2, dans lequel le premier réseau convertisseur comprend une première paire d'éléments de commutation (68, 70) incluant un premier élément de commutation (68) et un deuxième élément de commutation (70) connectés en série l'un à l'autre, le second réseau convertisseur comprend une deuxième paire d'éléments de commutation (92, 93) incluant un troisième élément de commutation (92) et un quatrième élément de commutation (93) connectés en série l'un à l'autre, et dans lequel la branche de rattachement actif (56) est connectée en parallèle à la première paire d'éléments de commutation (68, 70).

5. Convertisseur selon la revendication 4 comprenant en outre une troisième paire d'éléments de commutation (74 et 76) incluant un cinquième élément de commutation (74) et un sixième élément de commutation (76) connectés en série l'un à l'autre, et une quatrième paire d'éléments de commutation (96, 97) incluant un septième élément de commutation (96) et un huitième élément de commutation (97) connectés en série l'un à l'autre, la troisième paire d'éléments de commutation étant connectée en parallèle à la première paire d'éléments de commutation et la quatrième paire d'éléments de commutation étant connectée en parallèle à la deuxième paire d'éléments de commutation.

6. Convertisseur selon l'une quelconque des revendications précédentes, dans lequel ladite première cellule (50) est également connectée à la première région (2) au moyen d'une première interface de puissance (6), ladite première interface de puissance (6) comprenant :
- un premier interrupteur de couplage (14) ;
- une première branche de contrôle (20, 22, 24) incluant le deuxième condensateur (22), une première résistance (20) et un premier interrupteur de dérivation (24), la première résistance (20) et le deuxième condensateur (22) étant connectés en série l'un à l'autre, et le premier interrupteur de dérivation (24) étant connecté en parallèle à la première résistance (20),
ledit interrupteur de couplage (14) étant utilisable pour coupler et, alternativement, découpler électriquement la première cellule (50) de la première région (2),
ledit premier interrupteur de dérivation (24) étant ouvert au cours d'une étape de charge du deuxième condensateur (22) et fermé au cours d'une étape de décharge du deuxième condensateur (22).

7. Convertisseur selon la revendication 6, dans lequel ladite première interface de puissance (6) comprend en outre un premier voltmètre (26) configuré pour mesurer une valeur de tension au niveau des bornes d'extrémité de ladite première région (2).

8. Convertisseur selon l'une quelconque des revendications précédentes, dans lequel ladite première cellule (50) est également connectée à la seconde région (4) au moyen d'une seconde interface de puissance (8), ladite seconde interface de puissance (8) comprenant un second interrupteur de couplage (34), une seconde branche de contrôle (40, 42, 44) incluant une seconde résistance (40), un troisième condensateur (42) et un second interrupteur de dérivation (44), la seconde résistance (40) et le troisième condensateur (42) étant connectés en série l'un à l'autre, et le second interrupteur de dérivation (44) étant connecté en parallèle à la seconde résistance (40), ledit second interrupteur de couplage (34) étant utilisable pour coupler et, alternativement, découpler électriquement la première cellule (50) de la seconde région (4), ledit second interrupteur de dérivation (44) étant ouvert au cours d'une étape de charge du troisième condensateur (42) et fermé au cours d'une étape de décharge du troisième condensateur (42).

9. Convertisseur selon la revendication 8, dans lequel ladite seconde interface de puissance (8) comprend en outre un second voltmètre (46) configuré pour mesurer une valeur de tension au niveau des bornes d'extrémité de ladite seconde région (4).

10. Convertisseur selon l'une quelconque des revendications précédentes, dans lequel ladite première région (2) comprend une première branche de charge (16, 18) incluant une première résistance de charge (16) et un premier interrupteur de charge (18) connectés en série l'un à l'autre, ledit premier interrupteur de charge (18) étant activé pour connecter ladite première résistance de charge (16) au cours du mode de fonctionnement à tension abaissée.

11. Convertisseur selon l'une quelconque des revendications précédentes, dans lequel ladite seconde région (4) comprend une seconde branche de charge (36, 38) incluant une seconde résistance de charge (36) et un second interrupteur de charge (38) connectés en série l'un à l'autre, ledit premier interrupteur de charge (38) étant activé pour connecter ladite première résistance de charge (36) au cours du mode de fonctionnement à tension relevée.

12. Convertisseur selon l'une quelconque des revendications précédentes comprenant une seconde cellule (50) du même type que ladite première cellule (50), la première et la seconde cellule (50) étant connectées en parallèle l'une à l'autre.

13. Méthode de commande d'un convertisseur bidirectionnel CC-CC (100) comprenant une première cellule (50) connectée entre une première région (2) ayant un premier potentiel et une seconde région (4) ayant un second potentiel, la première cellule (50) incluant un premier réseau convertisseur (68, 70, 74, 76) ; un second réseau convertisseur (92, 93, 96, 97) ; un transformateur (80) couplable à la première région (2) au moyen du premier réseau convertisseur et à la seconde région (4) au moyen du second réseau convertisseur ; une branche de rattachement actif (56) connectée en parallèle au premier réseau convertisseur et incluant un interrupteur d'activation (62), un interrupteur de commutation (64) et un premier condensateur (66) connectés en série les uns aux autres ; un premier inducteur (60) connecté entre une borne de conduction de l'interrupteur d'activation (62) et la première région (2) ; et un deuxième condensateur (22) connecté au premier inducteur (60) afin de former, au cours d'un mode de fonctionnement à tension abaissée du convertisseur bidirectionnel (100), un filtre de sortie LC du convertisseur (100), et afin de former, avec le premier inducteur (60) et le premier condensateur (66), au cours d'un mode de fonctionnement à tension relevée du convertisseur bidirectionnel (100), un filtre d'entrée CLC du convertisseur (100),
la méthode comprenant les étapes de :
- ouverture, au cours du mode de fonctionnement à tension abaissée du convertisseur bidirectionnel (100), de l'interrupteur d'activation (62), afin d'isoler la branche de rattachement actif (56) ;
- fermeture, au cours du mode de fonctionnement à tension relevée du convertisseur bidirectionnel (100), de l'interrupteur d'activation (62), afin de connecter la branche de rattachement actif (56) ;
- génération d'un signal de commutation (ACASW) ayant un rapport cyclique croissant par étapes prédéfinies à partir d'une valeur minimale ; et
- commutation de l'interrupteur de commutation (64) au moyen dudit signal de commutation (ACASW) au cours du mode de fonctionnement à tension relevée.

14. Méthode selon la revendication 13, dans laquelle ladite valeur minimale est 0 %.

15. Méthode selon la revendication 13 ou 14, dans laquelle le premier réseau convertisseur comprend une première paire d'éléments de commutation (68, 70) incluant des éléments de commutation connectés en série les uns aux autres, la première paire d'éléments de commutation étant connectée en parallèle à la branche de rattachement actif (56), la méthode comprenant, au cours desdites étapes d'enclenchement de l'interrupteur d'activation (62) et de l'interrupteur de commutation (64), l'étape d'ouverture d'au moins l'un des éléments de commutation de la première paire d'éléments de commutation.

16. Méthode selon la revendication 15, dans laquelle le premier réseau convertisseur comprend une seconde paire d'éléments de commutation (74 et 76) incluant des éléments de commutation connectés en série les uns aux autres, la seconde paire d'éléments de commutation étant connectée en parallèle à la branche de rattachement actif (56), la méthode comprenant, au cours desdites étapes d'enclenchement de l'interrupteur d'activation (62) et de l'interrupteur de commutation (64), l'étape d'ouverture d'au moins l'un des éléments de commutation de la première ou de la seconde paire d'éléments de commutation.

17. Méthode selon l'une quelconque des revendications 13 à 16, dans laquelle ladite première cellule (50) est également connectée à la première région (2) au moyen d'une première interface de puissance (6), ladite première interface de puissance (6) comprenant un premier interrupteur de couplage (14) ; et une première branche de contrôle (20, 22, 24) incluant une première résistance (20), un deuxième condensateur (22) et un premier interrupteur de dérivation (24), la première résistance (20) et le deuxième condensateur (22) étant connectés en série l'un à l'autre, et le premier interrupteur de dérivation (24) étant connecté en parallèle à la première résistance (20),
ladite première cellule (50) étant également connectée à la seconde région (4) au moyen d'une seconde interface de puissance (8) incluant une seconde branche de contrôle (40, 42, 44) possédant un troisième condensateur (42), et une première branche de charge (36, 38) formée par une première résistance de charge (36) et un second interrupteur de charge (38) connectés en série l'un à l'autre,
la méthode comprenant en outre, avant de faire fonctionner le convertisseur bidirectionnel dans un mode de fonctionnement relevé, les étapes de :
- fermeture de l'interrupteur de couplage (14) par le couplage électrique de la première cellule (50) à la première région (2) ;
- ouverture du premier interrupteur de dérivation (24), chargeant ainsi le troisième condensateur (22) exclusivement à travers la première résistance (20) ;
- détection d'une valeur de tension de la seconde région (4) et comparaison de la valeur de tension détectée avec une valeur de tension de référence et, dans le cas où ladite valeur détectée est inférieure à ladite valeur de référence, réalisation des étapes de :
- fermeture du second interrupteur de charge (38) afin de connecter une première charge (36) à la seconde interface de puissance (8) ;
- augmentation de la valeur du rapport cyclique du signal de commutation (ACASW) par étapes prédéfinies à partir d'une valeur de rapport cyclique de 0 % ;
- charge du troisième condensateur (42) ;
- ouverture du second interrupteur de charge (38), déconnectant ainsi la première charge (36) ;
- connexion électrique de la seconde interface de puissance (8) à la seconde région (4) ;
- transfert d'une charge électrique du troisième condensateur (42) à la seconde région (4).

18. Méthode selon la revendication 17 dans laquelle ladite seconde interface de puissance (8) comprend en outre un second interrupteur de couplage (34) ; et dans laquelle la seconde branche de contrôle (40, 42, 44) comprend en outre une seconde résistance (40) et un second interrupteur de dérivation (44), la seconde résistance (40) et le troisième condensateur (42) étant connectés en série l'un à l'autre, et le second interrupteur de dérivation (44) étant connecté en parallèle à la seconde résistance (40),
ladite première interface de puissance (6) comprenant en outre une première branche de charge (16, 18) incluant une seconde résistance de charge (16) et un second interrupteur de charge (18) connectés en série l'un à l'autre,
la méthode comprenant en outre, avant de faire fonctionner le convertisseur bidirectionnel dans un mode de fonctionnement abaissé, les étapes de :
- fermeture du second interrupteur de couplage (34), couplant ainsi électriquement la première cellule (50) à la seconde région (2) ;
- ouverture du second interrupteur de dérivation (44), chargeant ainsi le quatrième condensateur (42) exclusivement à travers la seconde résistance (40) ;
- détection d'une valeur de tension de la première région (2) et comparaison de la valeur de tension détectée avec une seconde valeur de tension de référence et, dans le cas où ladite valeur détectée est inférieure à ladite seconde valeur de référence, réalisation des étapes de :
- fermeture du premier interrupteur de charge (18) par la connexion d'une seconde charge (16) interne à la première interface de puissance (6) ;
- augmentation de la valeur du rapport cyclique du signal de commutation (ACASW) par étapes prédéfinies à partir d'une valeur de rapport cyclique de 0 % ;
- charge du troisième condensateur (22) ;
- ouverture du premier interrupteur de charge (18), déconnectant ainsi la seconde charge (16) ;
- connexion électrique de la première interface de puissance (6) à la première région (2) ;
- transfert d'une charge électrique du troisième condensateur (22) à la première région (2).
